# EUROPEAN PATENT SPECIFICATION

(11) **EP 1 992 444 B1**
(45) Date of publication and mention of the grant of the patent: **28.12.2011**
(21) Application number: 07737495.7
(22) Date of filing: 28.02.2007
(51) Int. Cl.: B23K 26/12, B23K 9/00, B23K 26/20

(54) **UNDERWATER REPAIR WELDING METHOD**
UNTERWASSERREPARATURSCHWEISSVERFAHREN
PROCEDE DE SOUDAGE DESTINE A UNE REPARATION SUBAQUATIQUE

(30) Priority: 28.02.2006 JP 2006053748
(43) Date of publication of application: 19.11.2008
(73) Proprietor: Kabushiki Kaisha Toshiba, Minato-ku, Tokyo 105-8001 (JP)
(72) Inventor: SHIIHARA, Katsunori, Tokyo 105-8001 (JP); KONO, Wataru, Tokyo 105-8001 (JP); TANAKA, Yoshimi, Tokyo 105-8001 (JP); TAMURA, Masataka, Tokyo 105-8001 (JP); SATO, Katsuhiko, Tokyo 105-8001 (JP); ITO, Tomoyuki, Tokyo 105-8001 (JP); SOMA, Koichi, Tokyo 105-8001 (JP); TANABE, Tomoharu, Tokyo 105-8001 (JP)
(74) Representative: Delumeau, François Guy
(86) International application number: PCT/JP2007/053741
(87) International publication number: WO 2007/099996

(56) References cited:
- JP-A- 05 031 591
- JP-A- 11 179 570
- JP-A- 2000 280 087
- JP-A- 2001 219 269
- JP-A- 2002 103 077
- JP-A- 2003 311 463

## Description

The present invention relates to an underwater repair welding method for carrying out an underwater weld repairing operation by means of a laser beam without discharging water.

### BACKGROUND ART:

A method of laser-welding an underwater structure by applying a highly watertight cover (chamber) to the object of welding in order to produce a gaseous environment at the site of the object of welding and forcing out water in the chamber by means of inactive gas is known (see Patent Document 1). However, with the above-described known underwater laser welding method and an underwater laser welding apparatus adapted to employ the method, the entire arrangement becomes inevitably huge because a complex and large drying apparatus is required to by turn give rise to a problem of a poor accessibility to the inside of the complex structure including narrow areas and a poor operability.

A technique of realizing underwater welding by ejecting inactive gas from a laser welding head nozzle and holding only the site of welding temporarily in a gaseous environment by the energy of the ejected inactive gas is known as a technique for coping with the above identified problem (see Patent Documents 2 and 3). However, this technique mainly relates to a nozzle profile and making a gas flow to stay at the underwater site of welding in order to hold it temporarily in gas without any chamber.
Patent Document 1: Japanese Patent Application Laid-Open Publication No. 05-031591
Patent Document 2: Japanese Patent Publication No. 3012175
Patent Document 3: Japanese Patent Publication No. 3619286

### DISCLOSURE OF THE INVENTION

### PROBLEM TO BE SOLVED BY THE INVENTION:

A welding head of the above-described type can satisfactorily operate on the surface of an underwater structure for laser welding. However, when a protection plate is applied to the surface of the structure, defective welding can arise frequently to make it difficult to provide a good welding quality because water cannot be discharged sufficiently from the area between the protection plate and the welding site and the water staying in the welding site evaporates and bursts out. In short, the conventional art does not specifically define the laser beam converging method, the protection plate profile, the protection plate aligning procedures and the welding process for underwater welding using a protection plate and hence the method of welding / bonding the protection plate and the underwater surface to be repaired is accompanied by problems including that the water staying in the gap between them evaporates and bursts out.

Additionally, while the protection plate and the surface to be repair-welded need to be completely put together for welding using a protection plate, a large protection plate holding apparatus needs to be introduced in order to remotely carry out the underwater welding operation. Therefore, there is a demand for simpler operation jigs that can improve such underwater welding operations.

In view of the above-identified circumstances, it is therefore an object of the present invention to suppress or prevent the problem of defective welding due to burst out of the welding metal that may arise in underwater weld-repairing when the residual water evaporates and bursts out while using a laser beam without discharging water.

### MEANS FOR SOLVING THE PROBLEM:

In order to achieve the object, according to an aspect of the present invention there is presented the underwater repair welding method according to claim 1

According to another aspect of the present invention, there is presented the underwater repair welding method according to claim 9

According to yet another aspect of the present invention, there is presented the underwater repair welding methods according to claim 10 or 13. for repairing a defective part of a lap plate itself.

### EFFECT OF THE INVENTION:

With the present invention, the problem of defective welding due to burst out of the welding metal can be suppressed or prevented that may arise in underwater weld-repairing when the residual water evaporates and bursts out.

### BRIEF DESCRIPTION OF THE DRAWINGS:

FIG. 1 is a schematic longitudinal cross-sectional view showing a state where a comparative underwater repair welding method not covered by the present invention ;
FIG. 2 is a schematic plan view showing a welding part where the comparative underwater repair welding method is being employed;
FIG. 3A is a schematic plan view of a protection plate where a first embodiment of underwater repair welding method of the present invention is being employed, showing a possible slit position thereof;
FIG. 3B is a schematic plan view of a protection plate where the first embodiment of underwater repair welding method of the present invention is being employed, showing another possible slit position thereof;
FIG. 3C is a schematic plan view of a protection plate where the first embodiment of underwater repair welding method of the present invention is being employed, showing still another possible slit position thereof;
FIG. 3D is a schematic plan view of a protection plate where the first embodiment of underwater repair welding method of the present invention is being employed, showing still another possible slit position thereof;
FIG. 3E is a schematic plan view of a protection plate where the first embodiment of underwater repair welding method of the present invention is being employed, showing still another possible slit position thereof;
FIG. 3F is a schematic plan view of a protection plate where the first embodiment of underwater repair welding method of the present invention is being employed, showing another possible slit position thereof;
FIG. 3G is a schematic plan view of a protection plate where the first embodiment of underwater repair welding method of the present invention is being employed, showing still another possible slit position thereof;
FIG. 3H is a schematic plan view of a protection plate where the first embodiment of underwater repair welding method of the present invention is being employed, showing still another possible slit position thereof;
FIG. 31 is a schematic plan view of a protection plate where the first embodiment of underwater repair welding method of the present invention is being employed, showing still other possible slit positions thereof;

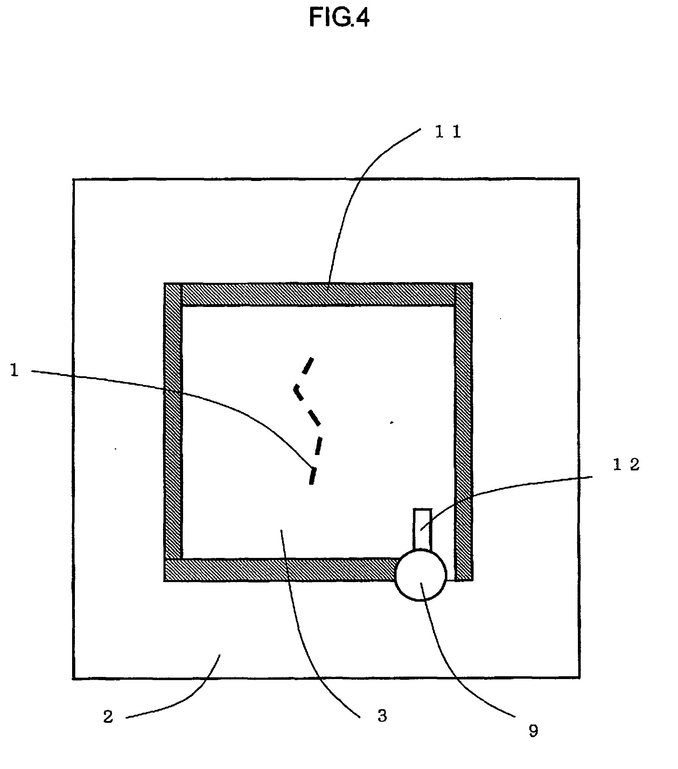

FIG. 4 is a schematic plan view showing a welding part where the first embodiment of underwater repair welding method of the present invention is being employed;

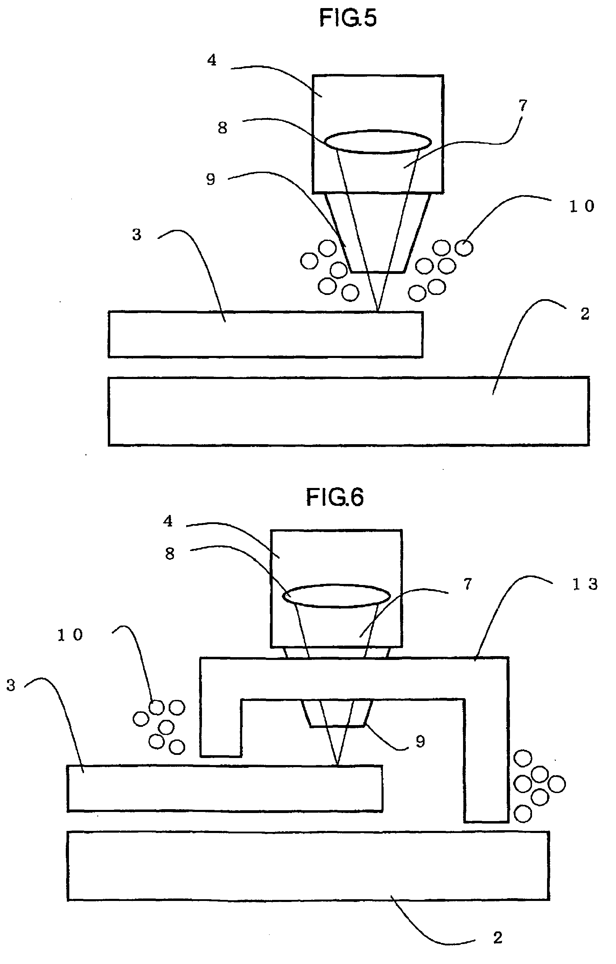

FIG. 5 is a schematic longitudinal cross-sectional view showing a state where the first embodiment of underwater repair welding method of the present invention is being employed;
FIG. 6 is a schematic longitudinal cross-sectional view showing a state where a modified first embodiment of underwater repair welding method of the present invention is being employed;

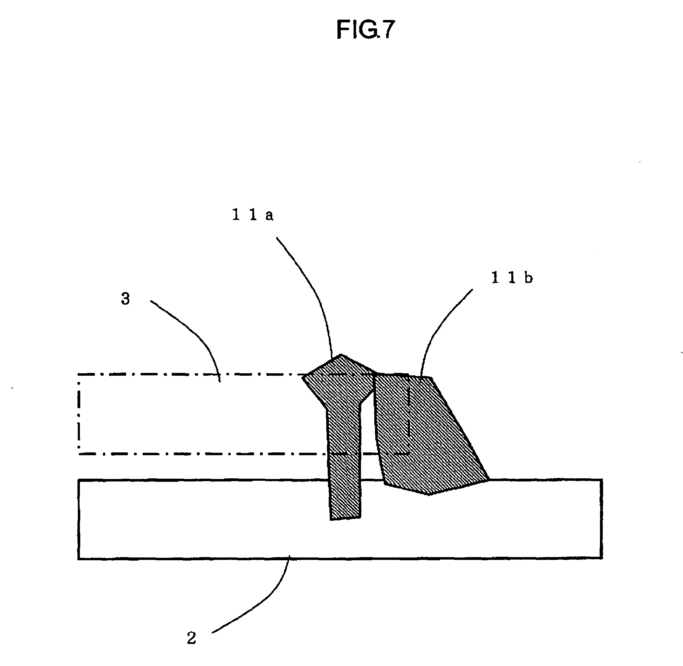

FIG. 7 is a schematic longitudinal cross-sectional view showing welding beads where the first embodiment of underwater repair welding method of the present invention is being employed;

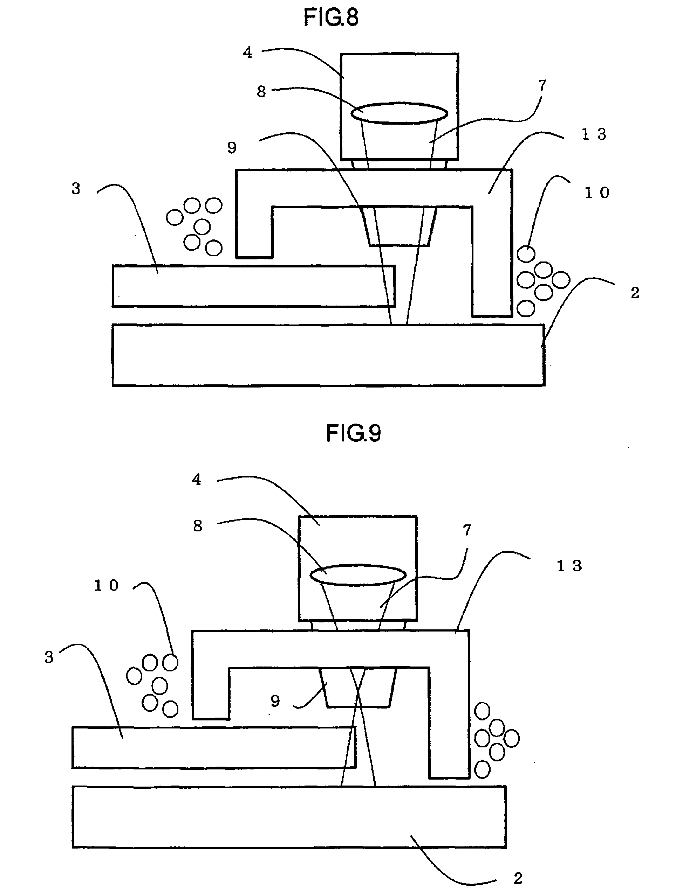

FIG. 8 is a schematic longitudinal cross-sectional view showing a state where another modified first embodiment of underwater repair welding method of the present invention is being employed;
FIG. 9 is a schematic longitudinal cross-sectional view showing a state where still another modified first embodiment of underwater repair welding method of the present invention is being employed;

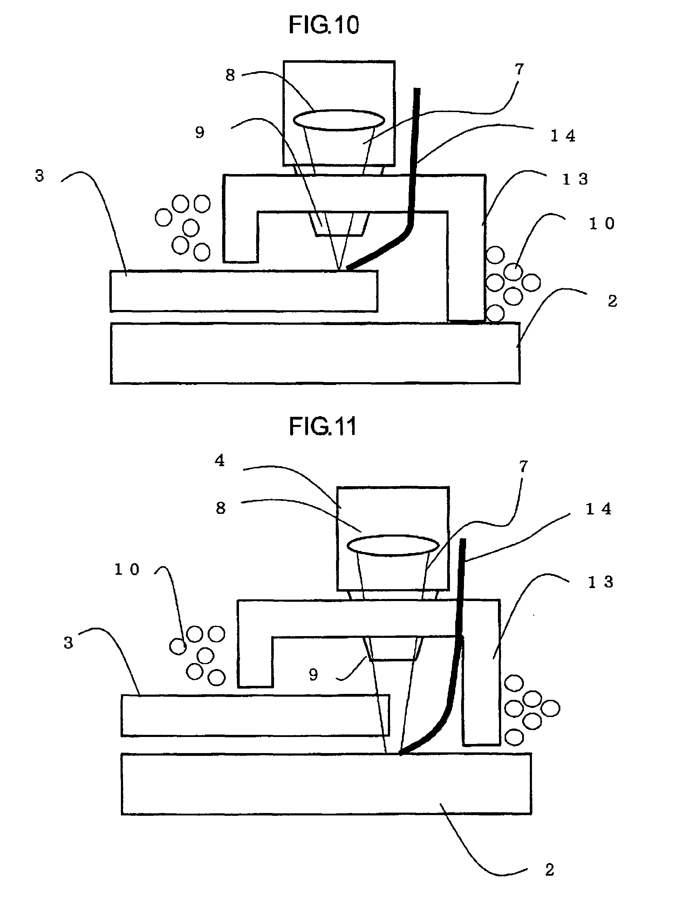

FIG. 10 is a schematic longitudinal cross-sectional view showing a state where still another modified first embodiment of underwater repair welding method of the present invention is being employed;
FIG. 11 is a schematic longitudinal cross-sectional view showing a state where still another modified first embodiment of underwater repair welding method of the present invention is being employed;

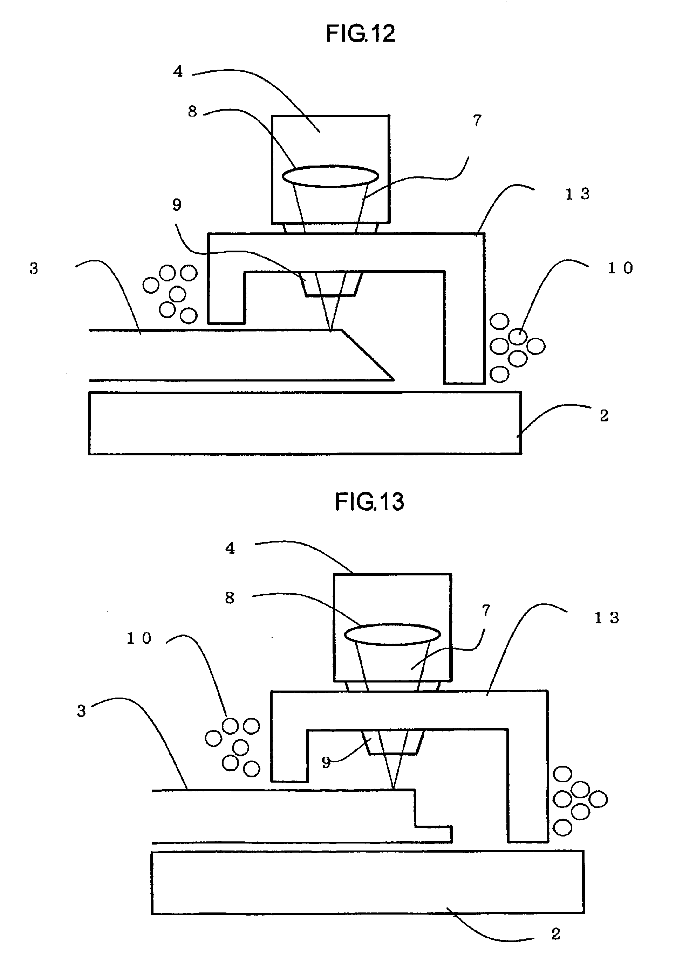

FIG. 12 is a schematic longitudinal cross-sectional view showing a state where still another modified first embodiment of underwater repair welding method of the present invention is being employed;
FIG. 13 is a schematic longitudinal cross-sectional view showing a state where still another modified first embodiment of underwater repair welding method of the present invention is being employed;

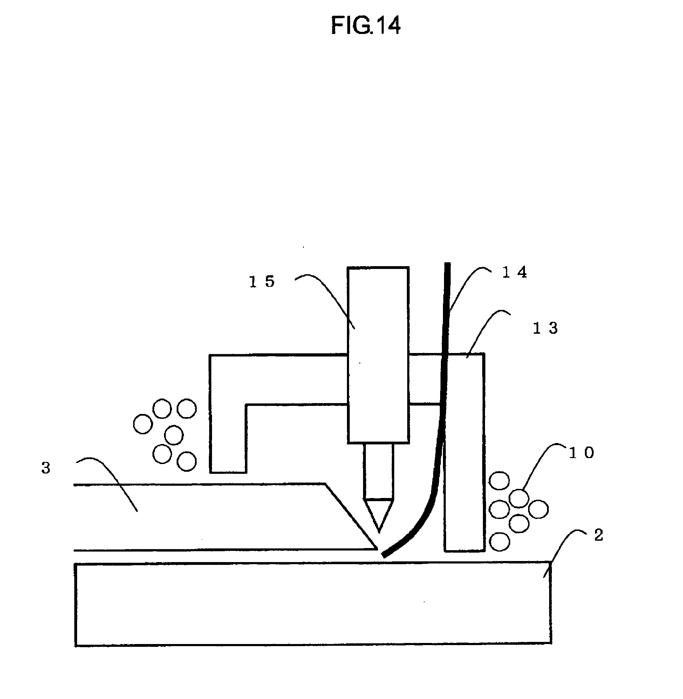

FIG. 14 is a schematic longitudinal cross-sectional view showing a state where still another modified first embodiment of underwater repair welding method of the present invention is being employed;

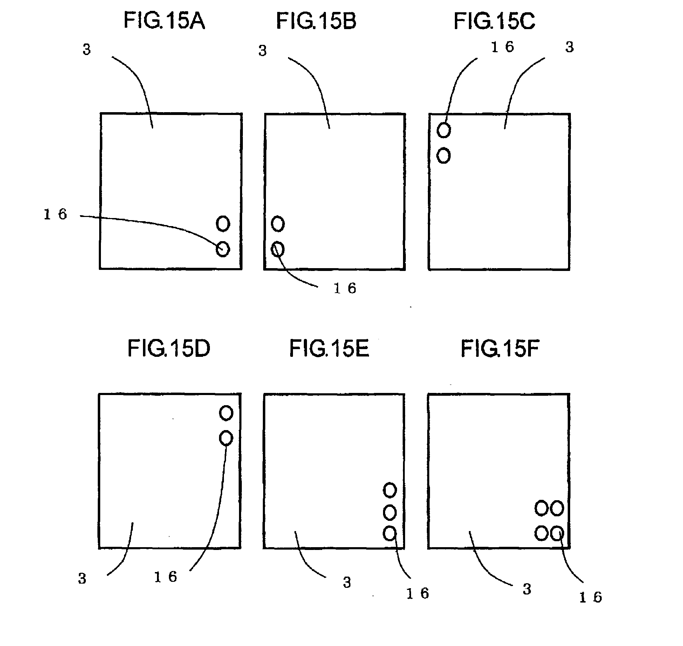

FIG. 15A is a schematic plan view of a protection plate where a second embodiment of underwater repair welding method of the present invention is being employed, showing possible through hole positions thereof;
FIG. 15B is a schematic plan view of a protection plate where the second embodiment of underwater repair welding method of the present invention is being employed, showing another possible through hole positions thereof;
FIG. 15C is a schematic plan view of a protection plate where the second embodiment of underwater repair welding method of the present invention is being employed, showing still another possible through hole positions thereof;
FIG. 15D is a schematic plan view of a protection plate where the second embodiment of underwater repair welding method of the present invention is being employed, showing still another possible through hole positions thereof;
FIG. 15E is a schematic plan view of a protection plate where the second embodiment of underwater repair welding method of the present invention is being employed, showing still another possible through hole positions thereof;
FIG. 15F is a schematic plan view of a protection plate where the second embodiment of underwater repair welding method of the present invention is being employed, showing still another possible through hole positions thereof;

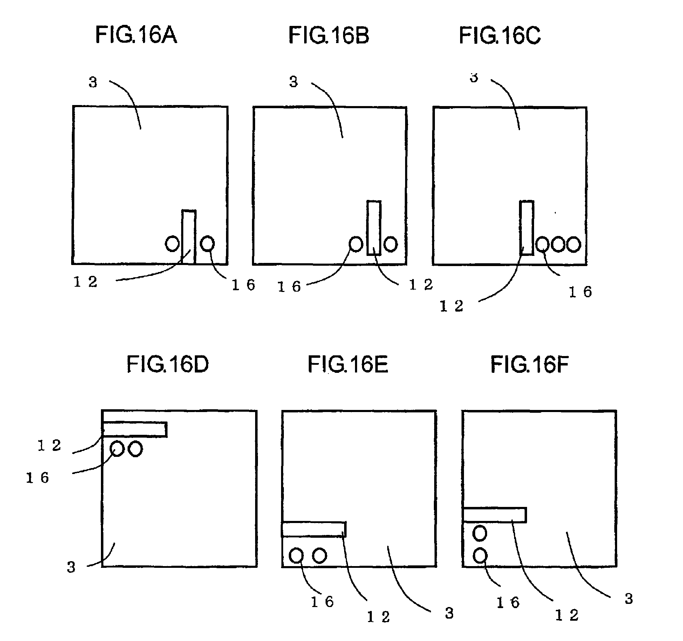

FIG. 16A is a schematic plan view of a protection plate where a third embodiment of underwater repair welding method of the present invention is being employed, showing possible positions of a slit and through holes;
FIG. 16B is a schematic plan view of a protection plate where the third embodiment of underwater repair welding method of the present invention is being employed, showing another possible positions of a slit and through holes;
FIG. 16C is a schematic plan view of a protection plate where the third embodiment of underwater repair welding method of the present invention is being employed, showing still another possible positions of a slit and through holes;
FIG. 16D is a schematic plan view of a protection plate where the third embodiment of underwater repair welding method of the present invention is being employed, showing still another possible positions of a slit and through holes;
FIG. 16E is a schematic plan view of a protection plate where the third embodiment of underwater repair welding method of the present invention is being employed, showing still another possible positions of a slit and through holes;
FIG. 16F is a schematic plan view of a protection plate where the third embodiment of underwater repair welding method of the present invention is being employed, showing still another possible positions of a slit and through holes;

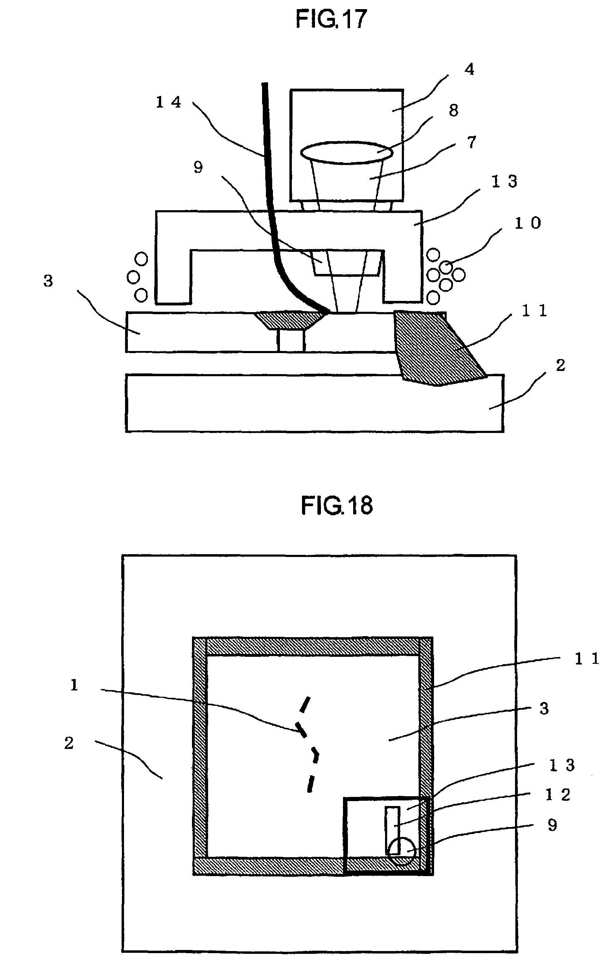

FIG. 17 is a schematic longitudinal cross-sectional view showing a welding method of closing the slit and the through hole;
FIG. 18 is a schematic plan view showing a welding part where the welding method of closing the slit and the through hole is being employed;

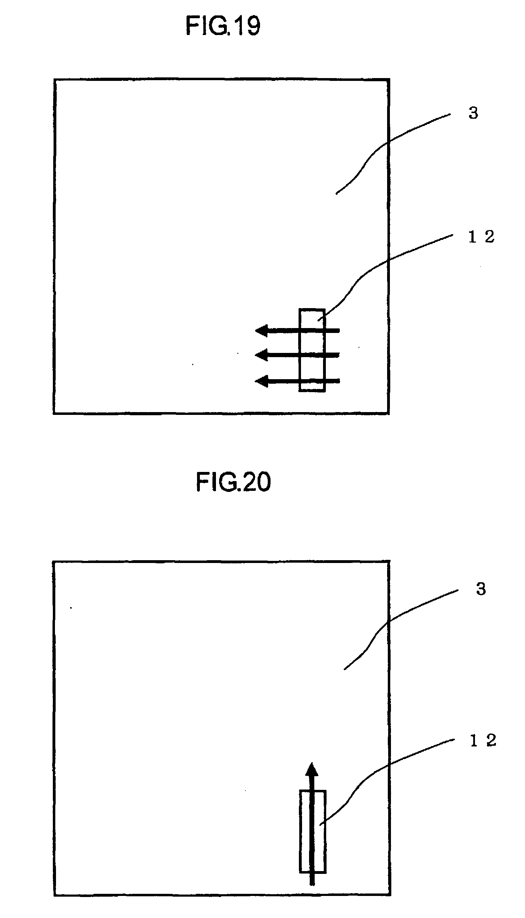

FIG. 19 is a schematic plan view of a protection plate where a welding method of closing the slit and the through hole is being employed, showing a possible welding direction;
FIG. 20 is a schematic plan view of a protection plate where a welding method of closing the slit and the through hole is being employed, showing another possible welding direction;

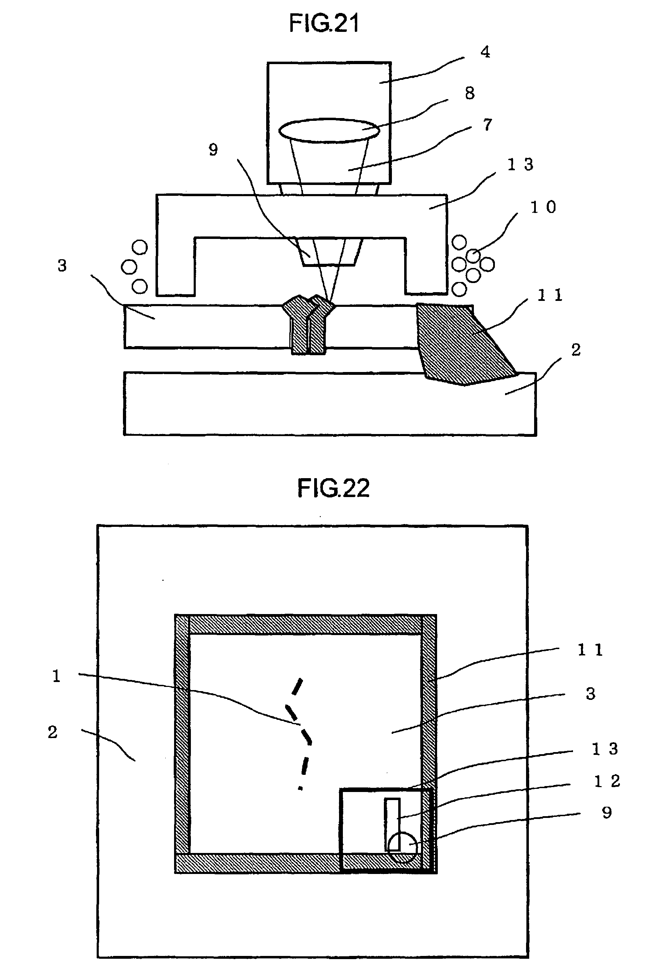

FIG. 21 is a schematic longitudinal cross-sectional view showing a modified welding method of closing the slit and the through hole ;
FIG. 22 is a schematic plan view showing a modified welding method of closing the slit and the through hole;

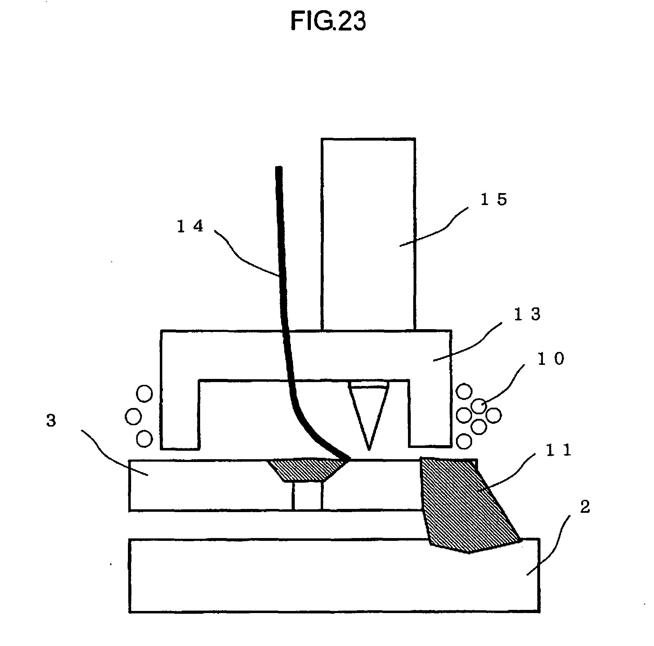

FIG. 23 is a schematic longitudinal cross-sectional view showing a modified welding method of closing the slit and the through hole ;

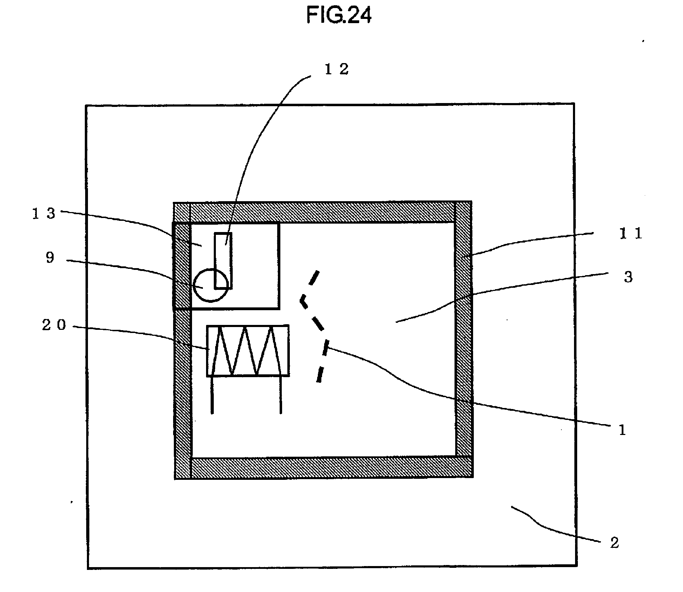

FIG. 24 is a schematic plan view showing a state where another welding method of closing the slit and the through hole is being employed;

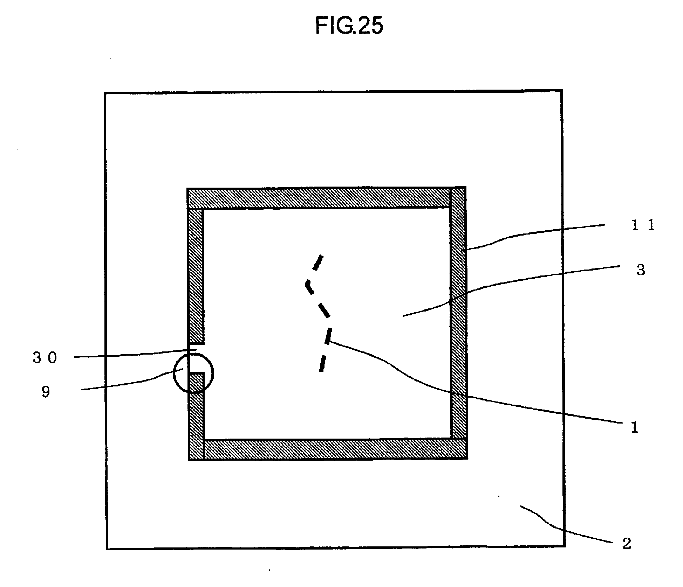

FIG. 25 is a schematic plan view showing a state where an underwater repair welding method not covered by the present invention is being employed;

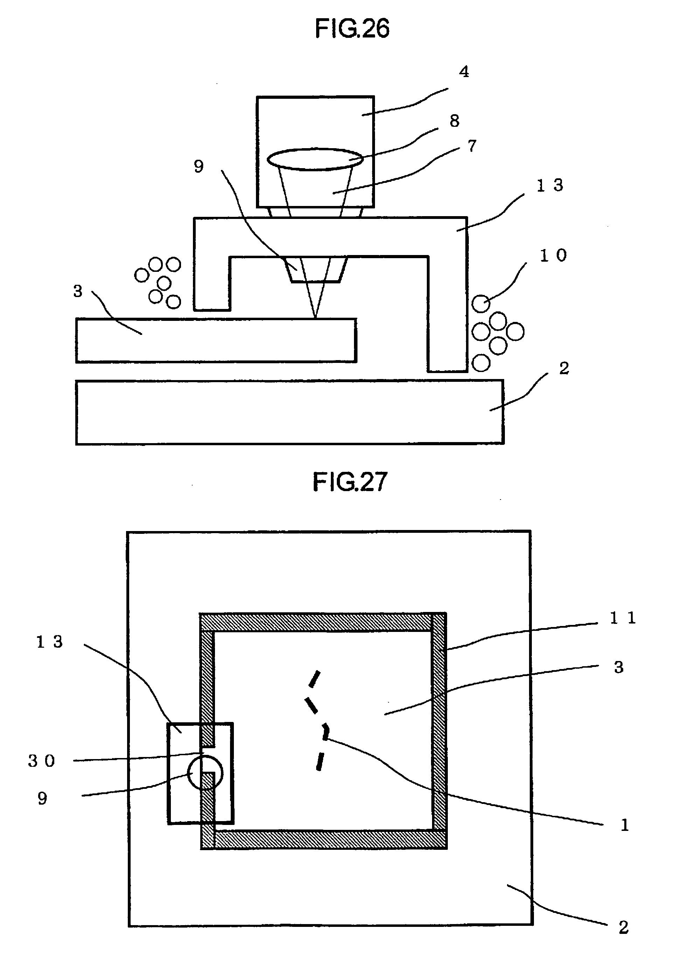

FIG. 26 is a schematic longitudinal cross-sectional view showing a state where the repair welding method of Fig. 25 is being employed;
FIG. 27 is a schematic plan view showing a state where the repair welding method of Fig. 25 is being employed;

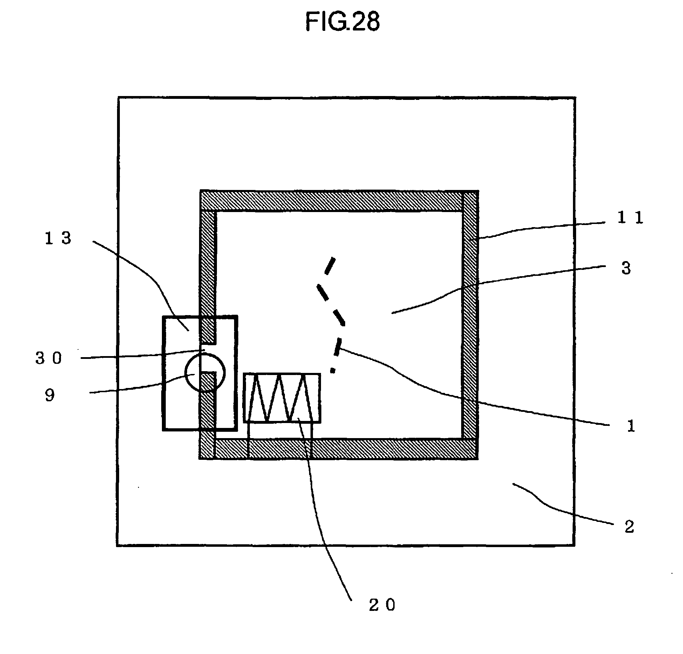

FIG. 28 is a schematic plan view showing a state where a modified repair welding method not covered by the present invention is being employed;

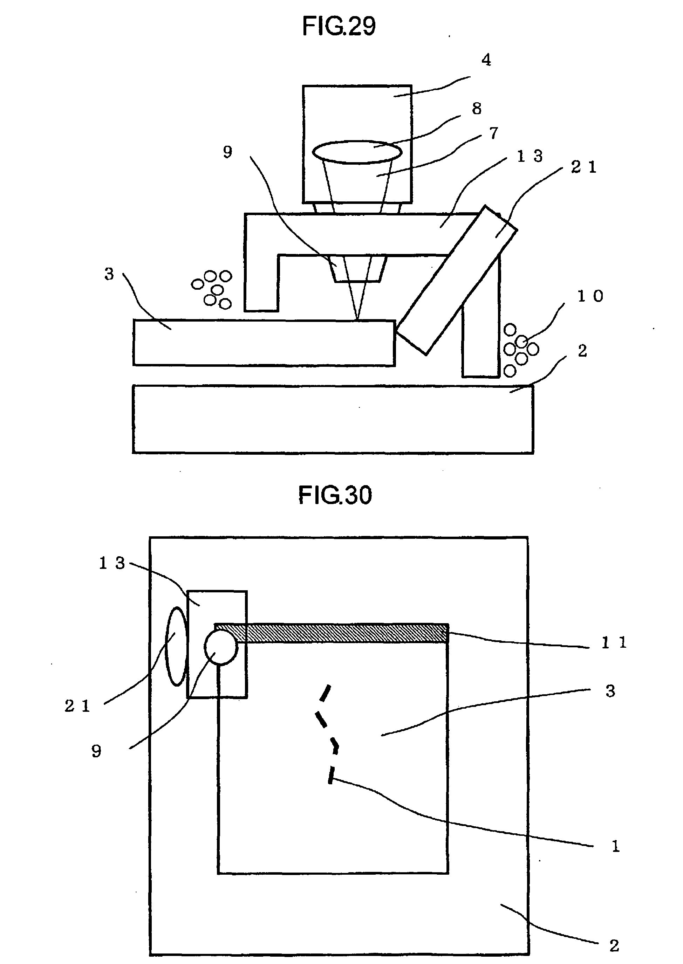

FIG. 29 is a schematic longitudinal cross-sectional view showing a state where an underwater repair welding method not covered the present invention is being employed;
FIG. 30 is a schematic plan view showing a state where the underwater repair welding method of Fig. 29 is being employed;

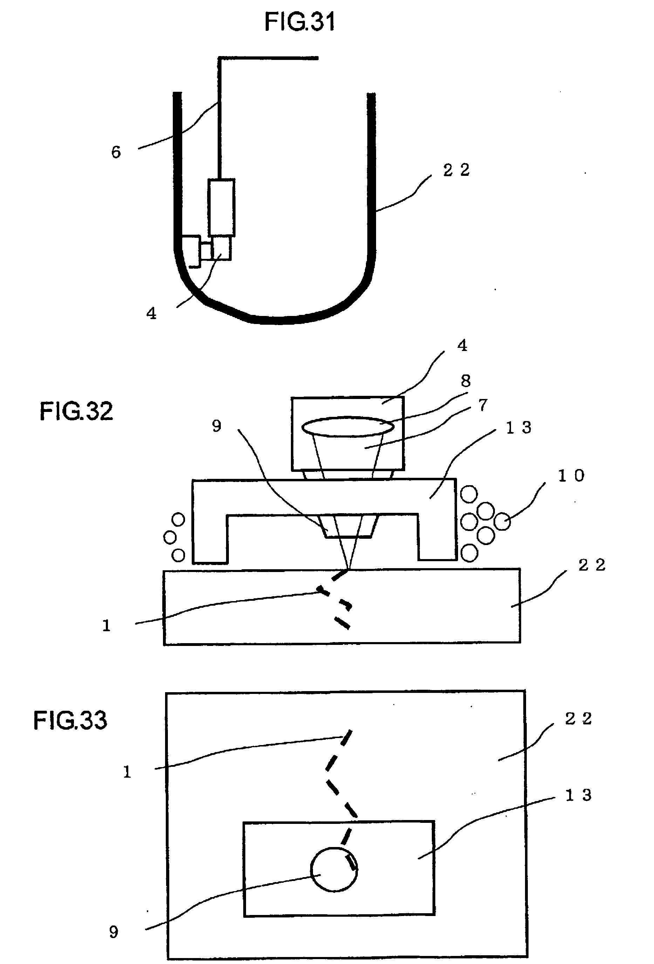

FIG. 31 is a schematic longitudinal cross-sectional view of a nuclear reactor, showing the inside thereof where an underwater repair welding method not covered by the present invention is being employed;
FIG. 32 is a schematic longitudinal cross-sectional view of a principal part of FIG. 31;
FIG. 33 is a schematic plan view showing a state where the underwater repair welding method of Fig. 31 is being employed;

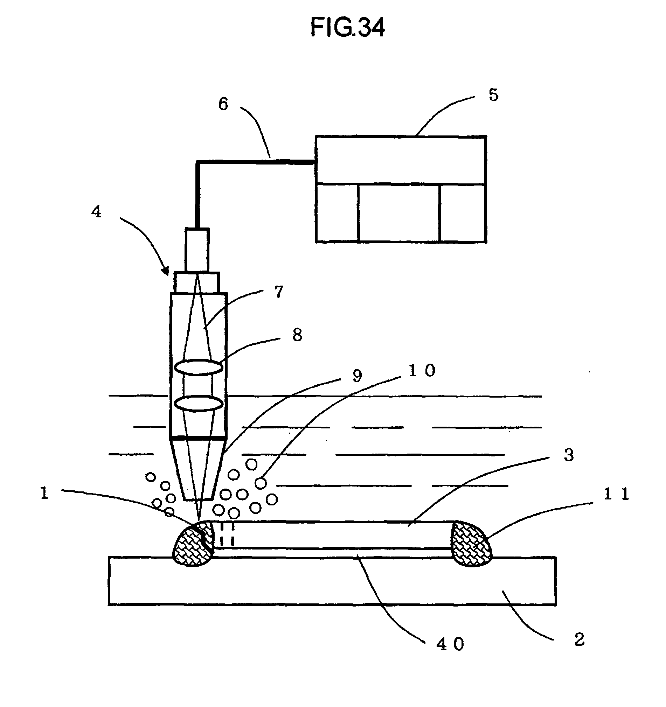

FIG. 34 is a schematic longitudinal cross-sectional view showing a state where a fourth embodiment of underwater repair welding method of the present invention is being employed;

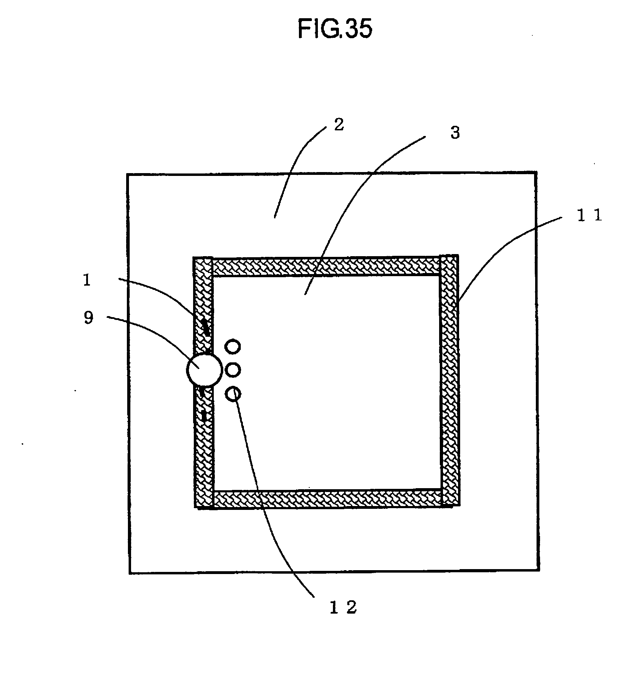

FIG. 35 is a schematic plan view showing a welding part of where the fourth embodiment of underwater repair welding method of the present invention is being employed;

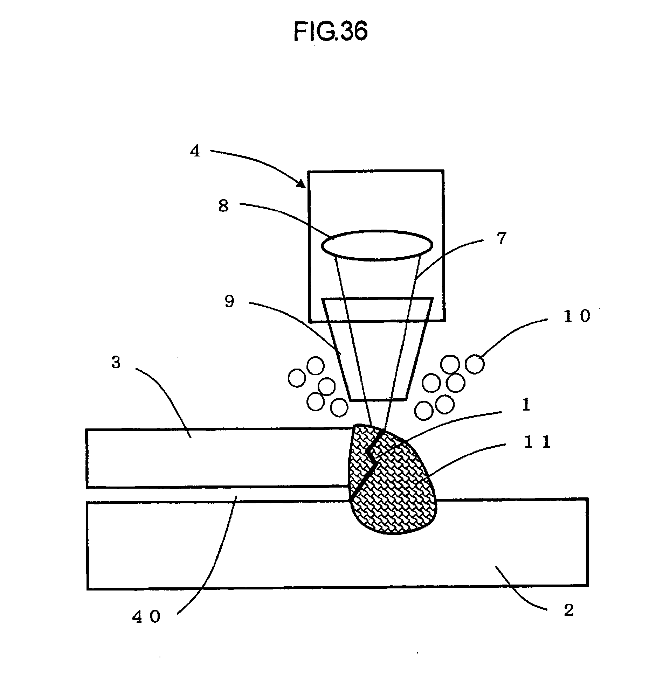

FIG. 36 is a schematic longitudinal cross-sectional view showing a state where an fifth embodiment of underwater repair welding method of the present invention is being employed;

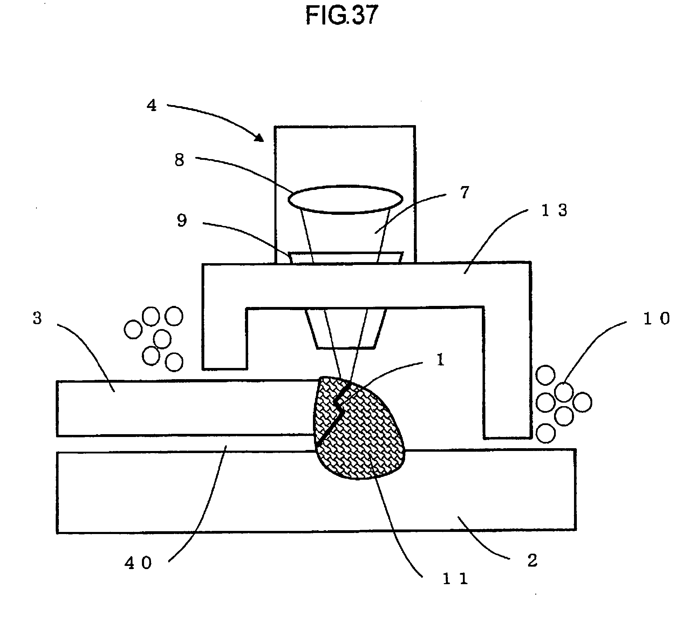

FIG. 37 is a schematic longitudinal cross-sectional view showing a state where a modified fifth embodiment of underwater repair welding method of the present invention is being employed;

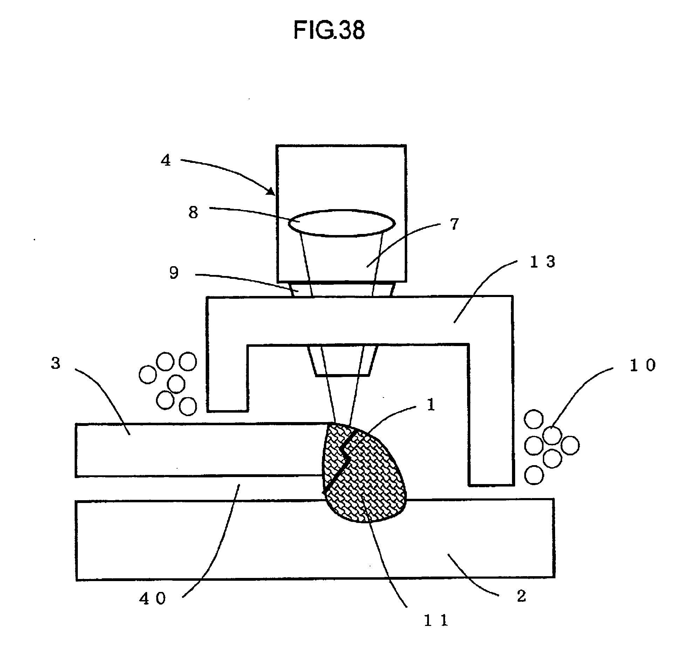

FIG. 38 is a schematic longitudinal cross-sectional view showing a state where another modified fifth embodiment of underwater repair welding method of the present invention is being employed;

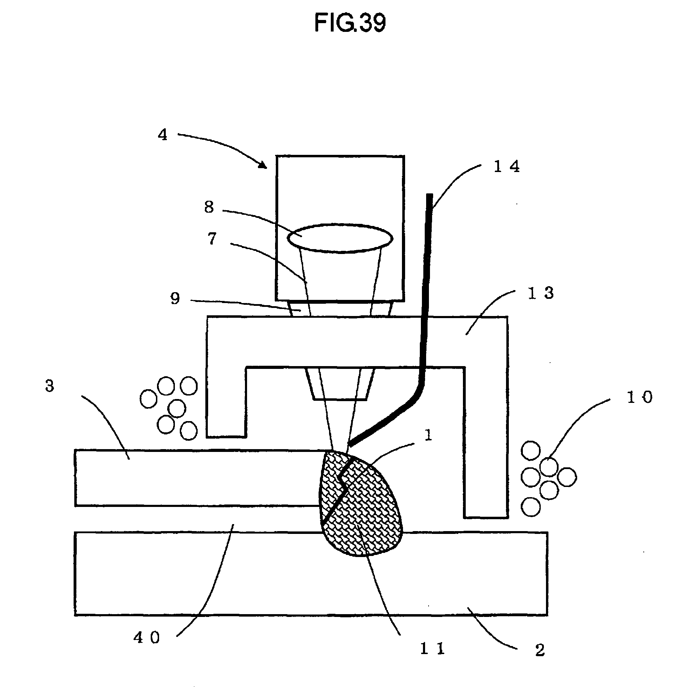

FIG. 39 is a schematic longitudinal cross-sectional view showing a state where still another modified fifth embodiment of underwater repair welding method of the present invention is being employed;

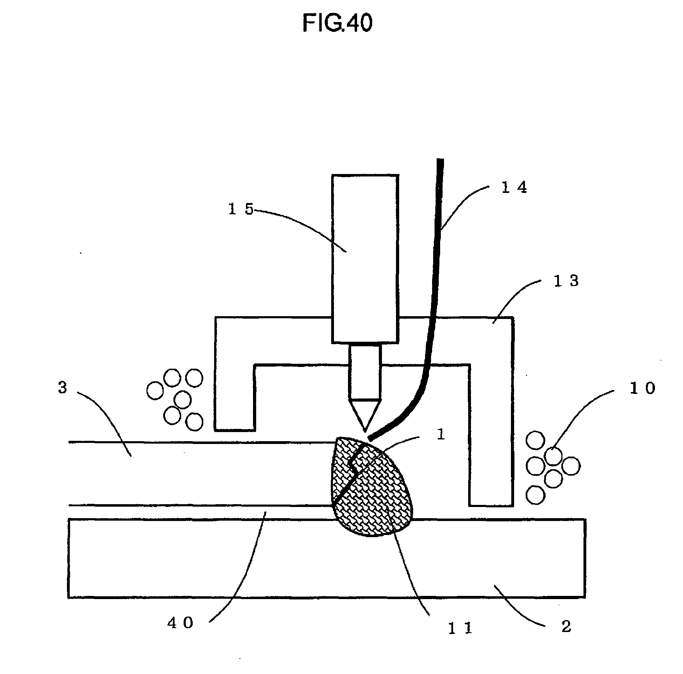

FIG. 40 is a schematic longitudinal cross-sectional view showing a state where still another modified fifth embodiment of underwater repair welding method of the present invention is being employed;

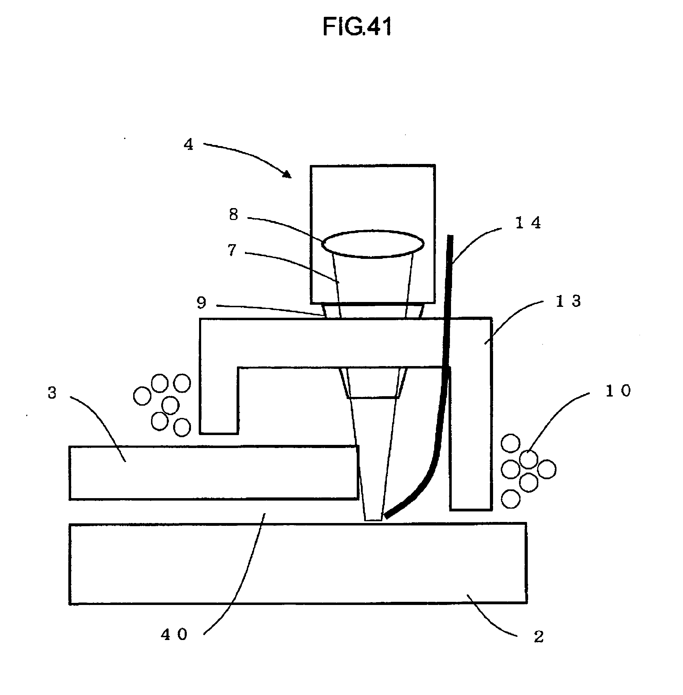

FIG. 41 is a schematic longitudinal cross-sectional view showing a state where still another modified fifth embodiment of underwater repair welding method of the present invention is 5 being employed;

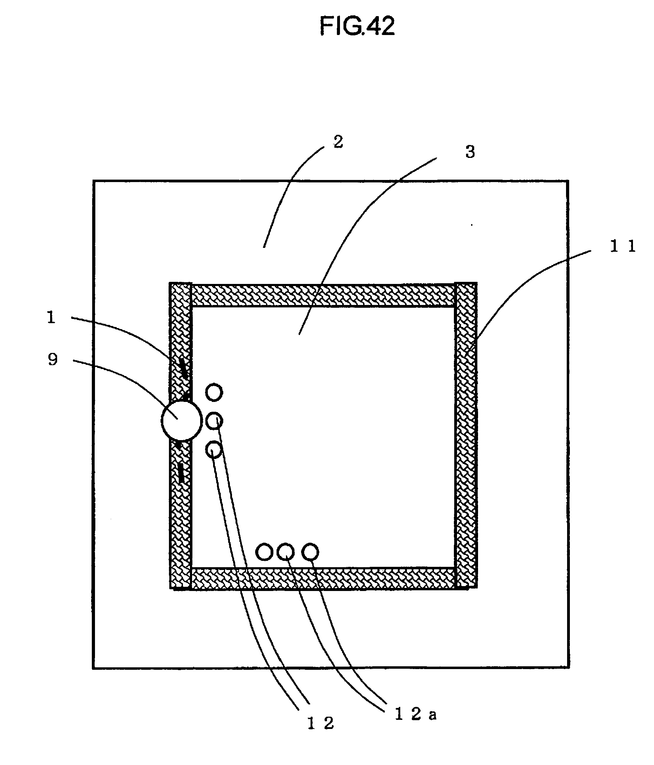

FIG. 42 is a schematic plan view showing a welding part where a sixth embodiment of underwater repair welding method of the present invention is being employed; and

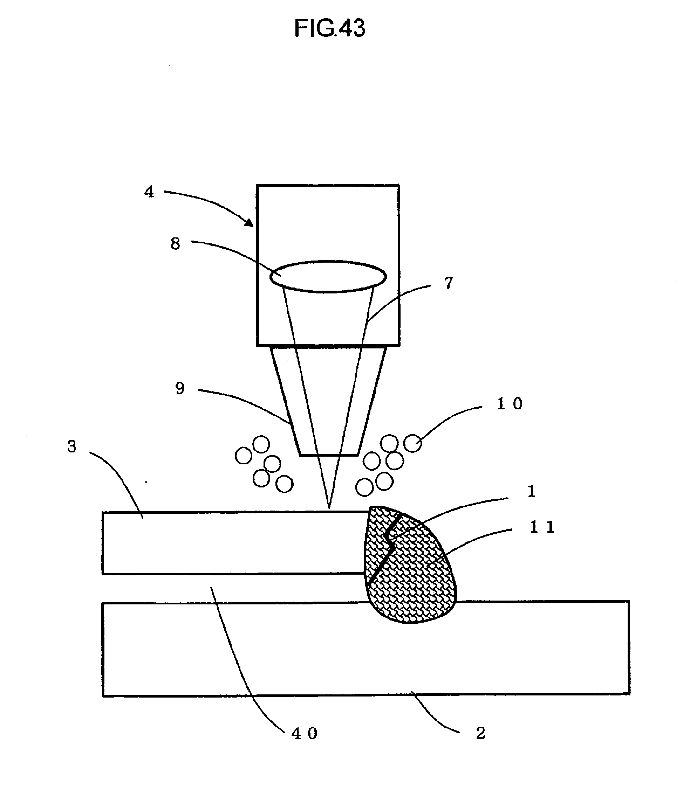

FIG. 43 is a schematic longitudinal cross-sectional view showing a state where a seventh embodiment of underwater repair welding method of the present invention is being employed.

### EXPLANATION OF REFERENCE SYMBOLS:

- 1:: defective part
- 2:: structure
- 3:: protection plate (lap plate)
- 4:: laser welding head
- 5:: oscillator
- 6:: fiber
- 7:: laser beam
- 8:: condenser lens
- 9:: nozzle
- 10:: inactive gas
- 11:: welding bead
- 12, 12a:: slit (aperture, steam release hole)
- 13:: shield cover
- 14:: filler wire
- 15:: TIG arc
- 16:: through hole (aperture)
- 20:: high frequency heating source
- 21:: side shield nozzle
- 22:: reactor internal structure
- 40:: gap

### BEST MODE FOR CARRYING OUT THE INVENTION:

Now, preferred embodiments of underwater repair welding method of the present invention will be described in greater detail by referring to the accompanying drawings. The parts common or similar to other embodiments are denoted respectively by the same reference symbols and will not be described repeatedly.

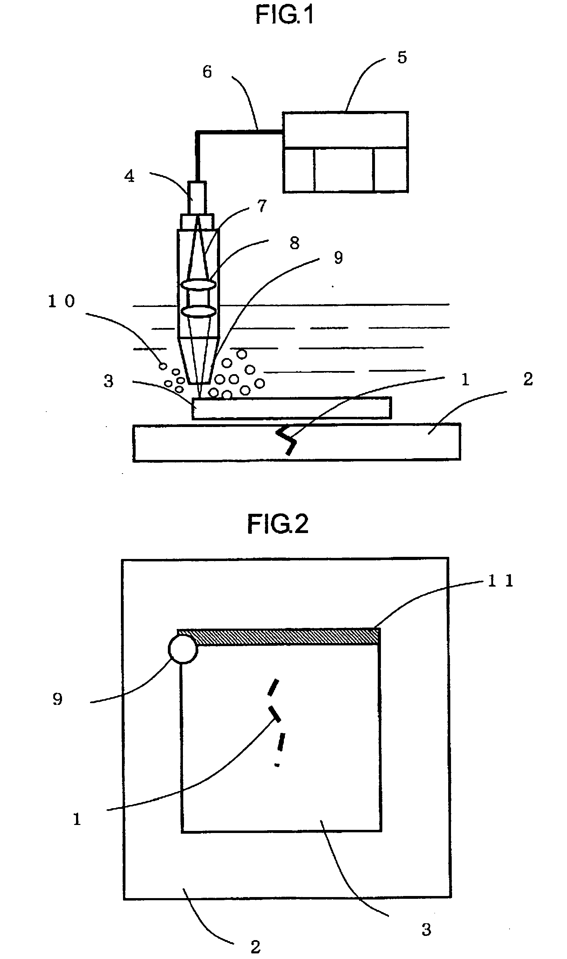

Referring to FiGs. 1 and 2, an example that is not covered by the present invention employs a protection plate 3 for isolating a defective part 1 of a structure 2 that may actually exist or eventually come to exist and a laser welding head 4 for welding the protection plate 3 and the structure 2. The welding head includes a condenser lens 8 for converging the laser beam 7 irradiated from an oscillator 5 and transmitted through a fiber 6 and a nozzle 9 arranged coaxially with the laser beam 7. The protection plate 3 is arranged so as to cover the defective part 1 of the structure 2 and its surrounding. The welding operation is carried out around the outer periphery of the arranged protection plate 3 by irradiating the laser beam 7, while supplying inactive gas 10 from the nozzle 9.

With this example, the surface of the structure 2 having the defective part 1 is covered by the protection plate 3 and the outer periphery of the latter is welded to the structure 2 by means of the laser beam 7, while supplying the inactive gas 10 from the nozzle 9 to isolate the defective part 1 of the structure 2 and suppress the erosion and prevent it from being worsening.

### [First Embodiment]

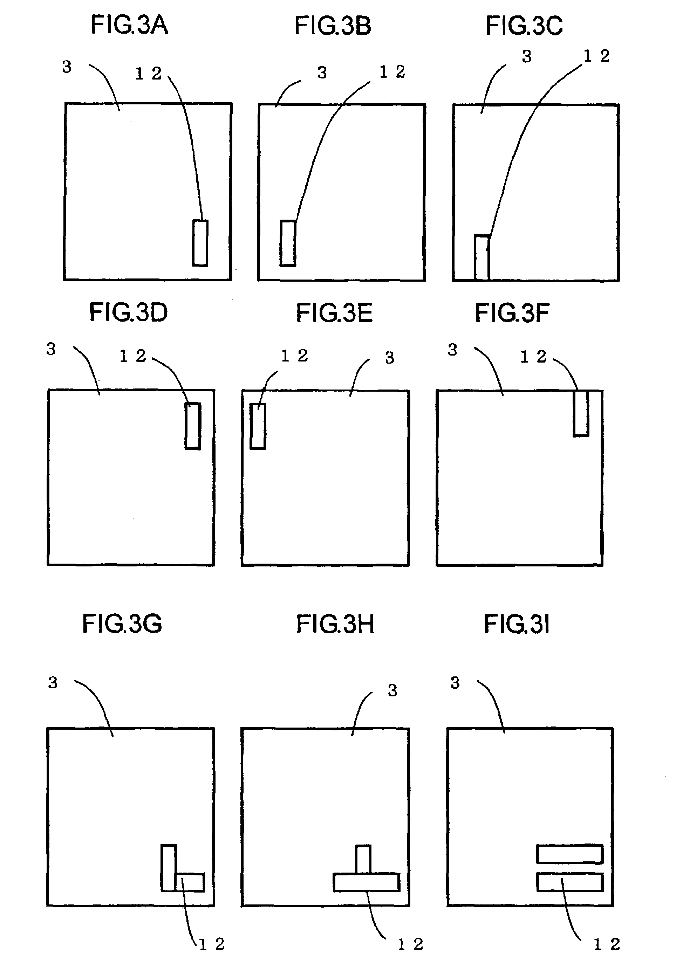

FIGs. 3A through 31 show protection plates 3 provided with one or two slits (apertures) 12 for releasing steam produced from water between a structure 2 and the protection plate 3 during a welding operation. For example, the slit 12 is 0.1 to 3 mm width and 0.3 mm long or longer and arranged to run along one of the sides and near a related corner of the protection plate. The slit 12 may be open to the end facet of a side of the protection plate. The slit 12 may have an oblong profile or a T-shaped or L-shaped profile. Two or more than two slits may be arranged horizontally.

As shown in FIG. 4, the outer periphery of the protection plate 3 is welded by laser welding in such a way that the end facet thereof located close to the slit 12 is the last welding position, while supplying inactive gas 10 from the nozzle 9.

As shown in FIGs. 5 and 6, when welding the outer periphery of the protection plate 3, the laser beam 7 is converged onto the surface of the protection plate 3 in order to realize keyhole welding. As shown in FIG. 6, the part of the protection plate 3 being welded may be covered by a shield cover 13, while supplying inactive gas 10. The outer periphery of the protection plate 3 may be welded by one pass welding or two pass welding.

As shown in FIG. 7, when the outer periphery of the protection plate 3 is welded by two pass welding, the protection plate 3 is welded firstly at a position separated from an end facet thereof by 1 mm to 5 mm as indicated by a welding bead 11a, and then subsequently at an area separated from the end facet by 2 mm as indicated by another welding bead 11b. When thermal conduction type welding is employed alternatively for welding the outer periphery of the protection plate 3, the laser beam 7 is converged to show a beam diameter of not less than 1.0 mm on the end facet of the protection plate 3 for the welding operation in a manner as shown in FIGs. 8 or 9. Still alternatively, the outer periphery of the protection plate 3 may be welded, while supplying a filler wire 14 to the part being welded as shown in FIGs. 10 or 11.

The end facets of the protection plate 3 may alternatively be made to show an inclined profile as shown in FIG. 12 instead of supplying a filler wire 14. Still alternatively, the end facets of the protection plate 3 may be made to show a lip-like profile as shown in FIG. 13. When thermal conduction type welding is employed for welding the outer periphery of the protection plate 3, a TIG arc (tungsten inert gas arc) 15, an MIG arc (metal inert gas arc) or a plasma arc may be used as heat source as shown in FIG. 14.

With this embodiment having the above-described arrangement, the steam produced from water between the protection plate 3 and the structure 2 by heat generated as a result of welding is discharged when the laser welding is terminated at the position of the slit 12. The welding bead 11 can be made to show a smooth surface by way of keyhole and two pass welding when welding the outer periphery of the protection plate 3. The welding bead for welding the protection plate 3 and the structure 2 can be made to show a smooth surface by providing the end facets of the protection plate 3 with inclination or a lip-like profile. A similar effect can be achieved by welding, while supplying a filler wire 14.

### [Second Embodiment]

FIGs. 15A through 15F show protection plates 3 provided with circular through holes (apertures) 16 for releasing steam produced from water between the structure 2 and the protection plate 3 during a welding operation. Two or more than two through holes 16 having a diameter of not less than 0.1 mm and separated from each other by a distance not less than 1 mm are vertically bored through the protection plate 3 near a corner of an end facet thereof. The outer periphery of the protection plate 3 is welded by laser welding in such a way that the end facet thereof located close to the through holes 16 is the last welding position.

With this embodiment having the above-described arrangement, the steam produced during the welding operation from water remaining between the protection plate 3 and the structure 2 is discharged through the through holes 16. Therefore, any metal is not blown off by steam pressure as a result of welding so that the protection plate 3 can be soundly welded to the structure 2.

### [Third Embodiment]

FIGs. 16A through 16F show protection plates 3 provided with a slit 12 and circular through holes 16 for releasing steam produced from water between the structure 2 and the protection plate 3 during a welding operation. The slit 12 and the through holes 16 are bored through the protection plate 3 near a corner of the side surface thereof. The outer periphery of the protection plate 3 is welded by laser welding in such a way that the end facet thereof located close to the slit 12 or the through holes 16 is the last welding position.

With this embodiment having the above-described arrangement, the steam produced during the welding operation from water remaining between the protection plate 3 and the structure 2 is discharged through the slit 12 and the through holes 16. Therefore, any metal is not blown off by steam pressure as a result of welding, so that the protection plate 3 can be soundly welded to the structure 2.

FIGs. 17 and 18 show a welding process of closing the slit 12 and the through holes 16 of a protection plate 3 for releasing steam. As shown, the protection plate 3 for isolating the defective part 1 of the structure 2 and a laser welding head 4 for welding the protection plate 3 and the structure 2 are arranged. The protection plate 3 has a slit 12 or both a slit 12 and circular through holes 16 for releasing steam. The welding head 4 is equipped with a shield cover 13 for covering an area including the slit 12 and the through holes 16 for releasing steam such that inactive gas 10 can be supplied to the inside of the shield cover. A filler wire 14 is supplied to the position where a laser beam 7 is irradiated.

The laser beam 7 to be irradiated is so defined as to show a beam diameter of not less than 1.0 mm in order to realize thermal conduction type welding. When welding the slit 12 and the through holes 16, firstly inactive gas 10 is supplied into the shield cover covering the slit 12 and the through holes 16 to discharge the water remaining in the gap between the protection plate 3 and the structure 2. Subsequently, the laser beam 7 is irradiated, while supplying a filler wire 14 as indicated by an arrow or arrows in FIGs. 19 and 20 to close the slit 12 and each of the through holes 16 by welding from below to above. The welding may be uphill welding.

The laser beam 7 may be focused onto the surface of the protection plate 3 so as to realize keyhole welding as shown in FIGs. 21 and 22. In the case of thermal conduction welding as shown in FIG. 23, a TIG arc 15, an MIG arc or a plasma arc may be employed as heat source.

With this embodiment having the above-described arrangement, the slit 12 and the through holes 16 are covered by the shield cover 13 and the water remaining between the protection plate 3 and the structure 2 is discharged to below the lower surfaces of the slit 12 and the through holes 16 by inactive gas, so that the water remaining between the protection plate 3 and the structure 2 is prevented from turning to steam and blowing off welding metal when the slit 12 and the through holes 16 are welded. As a result, the protection plate can be welded soundly.

FIG. 24 shows another welding process of closing the slit and the through holes 16 for releasing steam. As shown in FIG. 24, a shield cover 13 for covering an area including the slit 12 and the through holes 16 for releasing steam is arranged such that inactive gas 10 can be supplied to the inside of the shield cover. Additionally, a high frequency heating source 20 is arranged to heat the surface of the protection plate 3.

With this embodiment having the above-described arrangement, the slit 12 and the through holes 2 are covered by the shield cover 13 and the inactive gas 10 is supplied, while the protection plate 3 is heated from the surface thereof by the high frequency heating source 20. As a result, the water remaining between the protection plate 3 and the structure 2 is discharged to below the lower surfaces of the slit 12 and the through holes 16 so that the water remaining between the protection plate 3 and the structure 2 is prevented from turning to steam and blowing off welding metal when the slit 12 and the through holes 16 are welded. As a result, the protection plate can be welded soundly.

FIG. 25 shows a process of welding the outer periphery of a protection plate 3 when neither a slit nor a through hole for releasing steam is arranged in the protection plate 3. This example is therefore not covered by the present invention. As shown in FIG. 25, a structure 2 having a defective part 1, a protection plate 3 for isolating a structure 2 having a defective part 1 and a laser welding head 4 for welding the protection plate 3 and the structure 2 are provided. The outer periphery of the protection plate 3 is welded except an unwelded part 30 that is not less than 1 mm long, while supplying inner gas 10 to the part to be welded, from a nozzle 9.

Subsequently, as shown in FIGs. 26 and 27, the unwelded part is covered by a shield cover 13 and the inactive gas 10 is supplied to discharge the water remaining in the gap between the protection plate 3 and the structure 2. Then, the unwelded part is welded from below to above. Before welding the unwelded part, the water remaining in the gap between the protection plate 3 and the structure 2 may be discharged by heating the surface of the protection plate 3 by means of a high frequency heating source 20 in addition to covering the unwelded part by a shield cover 13 and supplying the inactive gas 10 as shown in FIG. 28.

With the above-described arrangement, an unwelded part is left at some position of the outer periphery of the protection plate 3. Then, the unwelded part is covered by the shield cover 13 and the inactive gas 10 is supplied, or the unwelded part is covered by a shield cover 13 and the surface of the protection plate 3 is heated by the high frequency heating source 20, in order to discharge the water remaining in the gap between the protection plate 3 and the structure 2. As a result, the protection plate can be welded soundly.

FIGs. 29 and 30 show a process of welding the outer periphery of a protection plate 3, arranging a side shield nozzle 21 in addition to a nozzle 9 and a shield cover 13. This process is not covered by the present invention.

With this example, the surface of a structure having a defective part 1 is covered by a protection plate 3 and the end facets of the protection plate 3 are welded, while driving off the water remaining in the gap between the protection plate 3 and the structure 2 by supplying the inactive gas 10 from a side shield nozzle 21. Thus, the part being welded and its vicinity are prevented from being wet by splashing water and any metal is not blown off by steam pressure as a result of welding so that the protection plate can be soundly welded to the structure.

According to another underwater repair welding method not covered by the present invention, a laser welding head 4 is arranged for a reactor internal structure 22 having a defective part 1 in order to weld the defective part 1 as shown in FIGs. 31, 32 and 33. The welding head 4 has a condenser lens 8 for converging a laser beam 7 irradiated from an oscillator 5 and transmitted through a fiber 6, a nozzle 9 arranged coaxially with the laser beam, and a shield cover 13 for covering the defective part 1. The defective part 1 is covered by the shield cover 13, and the laser beam 7 is irradiated horizontally toward the defective part 1, while supplying the inactive gas 10. Then, the irradiated part (part being welded) is moved upward.

With this example having the above-described arrangement, the water remaining in the inside of the defective part can be discharged as the surface of the reactor internal structure 22 having the defective part 1 is covered by a shield cover 13 and the laser beam 7 is moved upward for welding. Thus, any metal is not blown off by steam pressure as a result of closing the surface of the defective part by welding, so that the defective part can be soundly repair-welded.

### [Fourth Embodiment]

The fourth embodiment of underwater repair welding method according to the present invention will be described below by referring to FIGs. 34 and 35. FIG. 34 is a schematic longitudinal cross-sectional view showing a state where the fourth embodiment, of underwater repair welding method is being employed and FIG. 35 is a schematic plan view showing a welding part therefor.

The fourth embodiment is for repairing a welding bead 11 having a defective part 1 or a lap plate (protection plate) 3.

The lap plate 3 is arranged along the surface of a metal structure 2 and welded airtight along the outer periphery thereof by means of a welding bead 11. The lap plate 3 may typically be a protection plate for protecting a scar or some other defective part (not shown) produced on the surface of the metal structure 2. It may be a protection plate 3 employed in any of the above-described embodiments.

With the fourth embodiment, the defective part 1 that is produced on the welding bead 11 or the lap plate 3 is repaired underwater by welding. The defective part 1 is produced on the welding bead 11 in the illustrated example. A gap 40 is formed between the lap plate 3 and the surface of the structure 2.

When carrying out the fourth embodiment of underwater repair welding method, firstly steam release holes 12 are formed through the lap plate 3 at positions near the defective part 1. A specific example of forming the steam release holes 12 will be described below by referring to the seventh embodiment.

Then, the defective part 1 is repaired by means of a laser welding head 4. The laser welding head 4 is connected to an oscillator 5 by way of a fiber 6 and provided with a condenser lens 8 and a nozzle 9 arranged coaxially with the laser beam 7. The laser beam 5 irradiated from the oscillator 5 is transmitted through the fiber 6 to the laser welding head 4 and converged by the condenser lens 8. At the same time, inactive gas 10 is supplied to the part being welded from the nozzle 9.

Thereafter, the steam release holes 12 are closed by welding in a manner like the repair of the defective part 1 described above. At this time, the water remaining in the gap 40 between the lap plate 3 and the surface of the structure 2 is turned to steam and discharged through the steam release holes 12 before the steam release holes 12 are tightly closed.

As described above, with this embodiment, the water remaining in the gap between the lap plate 3 and the surface of the structure 2 is turned to the steam and discharged, and any metal is not blown off by steam pressure, so that the defective part can be soundly repair-welded.

### [Fifth Embodiment]

The fifth embodiment of underwater repair welding method according to the present invention will be described below by referring to FIGs. 36 through 41. FIGs. 36 through 41 are schematic longitudinal cross-sectional views showing a state where the fifth embodiment of underwater repair welding method is being employed in so many different situations.

In the instance illustrated in FIG. 36, when welding a welding bead 11 having a defective part 1 like the one described above as the fourth embodiment, a laser beam 7 is converged to the surface of the welding bead 11 so as to realize keyhole welding.

Steam release holes 12 are formed near the defective part 1 so that the water remaining in the gap 40 between the lap plate 3 and the surface of the structure 2 is turned to steam by the heat generated as a result of welding and discharged during the welding operation. The defective part 1 can be completely closed by employing keyhole welding for welding the defective part 1.

With this embodiment, since the water remaining in the gap 40 between the lap plate 3 and the surface of the structure 2 is turned to the steam and discharged from the steam release holes 12 during the welding operation, so that any metal may not be blown off by steam pressure. Additionally, the defective part 1 can be completely closed without leaving any defect in the inside, although the defective part 1 is not removed.

As a modification to the above-described fifth embodiment, the part to be welded may be covered by a shield cover and inactive gas 10 may be supplied during the welding process, as shown in FIG. 37.

As another modification to the fifth embodiment, the diameter of the laser beam 7 irradiated on the surface of the welding bead may be defined to be not less than 1.0 mm as shown in FIG. 38 when the welding bead 11 having a defective part 1 is welded by means of thermal conductive type welding.

As still another modification to the fifth embodiment, a filler wire 14 may be supplied to the part being welded of the defective part 1 as shown in FIG. 39.

As still another modification to the fifth embodiment, a TIG arc 15, an MIG arc or a plasma arc may be employed as heat source as shown in FIG. 40 when the outer periphery of the lap plate 3 is welded by means of thermal conductive type welding.

As still another modification to the fifth embodiment, the welding bead 11 having a defective part 1 may be removed mechanically in advance instead of employing keyhole welding and subsequently the defective part may be repaired by re-welding, while supplying a filler wire 14 as shown in FIG. 41.

### [Sixth Embodiment]

Now, the sixth embodiment of underwater repair welding method of the present invention will be described below by referring to FIG. 42. FIG. 42 is a schematic plan view showing a welding part where the sixth embodiment of underwater repair welding method is being employed. Steam release holes 12a are formed along the lower edge in FIG. 42 of a lap plate 3 in addition to steam release holes 12 formed near a defective part 1. The defective part 1, the steam release holes 12 formed near the defective part 1 and the steam release holes 12a formed along the lower edge in FIG. 42 of the lap plate 3 are welded sequentially in the above mentioned order.

With this embodiment, steam generated during the process of welding the defective part 1 is discharged through the steam release holes 12, 12a and all the water remaining in the gap 40 can be discharged before welding the lower steam release holes 12a. As a result, any metal is not blown off by steam pressure, so that the defective part 1 can be soundly repair-welded. Additionally, all the water remaining in the gap 40 can be discharged before welding the lower steam release holes 12a of the lap plate 3 for the repair wending operation.

### [Seventh Embodiment]

Now, the seventh embodiment of underwater repair welding method of the present invention will be described below by referring to FIG. 43. FIG. 43 is a schematic longitudinal cross-sectional view showing a state where the seventh embodiment of underwater repair welding method is being employed. This embodiment employs a laser welding head (laser processing head) 4, a fiber 6, an oscillator 6 and a nozzle 9 that are similar to those employed for repair-welding and closing steam release holes with the fourth embodiment when processing the steam release holes 12 like the ones described above by referring to the fourth through sixth embodiments by laser welding (see FIG. 34).

A laser beam 7 irradiated from the oscillator 5 is transmitted to the laser welding head 4 by way of the fiber 6 and converged by a condenser lens 8. At the same time, inactive gas 10 is supplied to the part to be welded from the nozzle 9.

Thereafter, the steam release holes 12, 12a are tightly closed by repair-welding the defective part 1 by means of the laser welding head 4 as in the case of the above-described first through sixth embodiments.

With this embodiment, the laser welding head (laser processing head) that is employed for processing the steam release holes 12, 12a can also be employed for the subsequent repair-welding and also for closing the steam release holes.

### [Other Embodiments]

The above-described embodiments are merely examples and the present invention is by no means limited thereto. While the lap plate 3 employed with each of the fourth through seventh embodiments is the same as a protection plate to be fitted to a defective part such as a scar produced on the surface of a metal structure 2 in the above description, the lap plate may not necessarily be the same as a protection plate so long as it is a plate to be laid on and welded to the surface of the metal structure 2.

## Claims

1. An underwater repair welding method for welding a protection plate (3) to a metal structure (2) so as to cover a surface of the structure including a part to be repaired underwater, **characterized in that**
the part to be repaired is hermetically closed by the protection plate by welding the periphery of the protection plate underwater, while supplying inactive gas (10) to a welding part coaxially with the laser beam (7) for laser welding, wherein
the protection plate is provided with an aperture for releasing steam generated during the welding from the water remaining between the protection plate and the structure, and
the aperture is closed after welding the outer periphery of the protection plate to the structure.

2. The method according to claim 1, **characterized in that**
the aperture is arranged adjacent to one of the sides of the protection plate and the side adjacent to the protection plate is welded last in the operation of welding the outer periphery of the protection plate to the structure.

3. The method according to claims 1 or 2, **characterized in that** the aperture is closed from below to above by covering the aperture by a shield cover, supplying the inactive gas into the shield cover to discharge the water between the protection plate and the structure and subsequently irradiating a laser beam.

4. The method according to claim 3, **characterized in that**
the surface of the protection plate is heated when discharging the water between the protection plate and the structure.

5. The method according to claim 1, **characterized in that**
the step of welding the outer periphery of the protection plate includes:
a first welding step of welding the outer periphery of the protection plate except a part thereof;
a water discharging step of discharging the water remaining between the protection plate and the structure after the first welding step; and
a second welding step of welding the part of the outer periphery of the protection plate left unwelded in the first welding step after the water discharging step.

6. The method according to claim 1, **characterized in that**
the step of welding the outer periphery of the protection plate includes: a first pass of welding the end facets of the protection plate from the inside; and a second pass of welding an area close to the end facets after the first pass.

7. The method according to any one of claims 1 through 6, **characterized in that**
the welding is conducted by covering the welding part by a shield cover and supplying the inactive gas into the shield cover.

8. The method according to claim 7, **characterized in that**
the welding part is covered by the shield cover and the inactive gas is supplied into the shield cover when welding the outer periphery of the protection plate, while a side shield nozzle is arranged in the shield cover to supply the inactive gas between the protection plate and the structure, and inactive gas is supplied to the side shield nozzle.

9. An underwater repair welding method for welding a protection plate (3) to a metal structure (2) so as to cover a surface of the structure including a part to be repaired underwater, **characterized in that**
the part to be repaired is hermetically closed by the protection plate by welding the periphery of the protection plate underwater using a TiG arc, a MiG arc, or a plasma arc, while supplying inactive gas (10) to a welding part coaxially with the arc, wherein
the protection plate is provided with an aperture for releasing steam generated during the welding from the water remaining between the protection plate and the structure, and
the aperture is closed after welding the outer periphery of the protection plate to the structure.

10. An underwater repair welding method for repairing a defective part of a lap plate itself arranged along a surface of a metal structure so as to cover part thereof or a defective part of a welding part of the lap plate underwater, **characterized in that** the method comprises:
a through hole forming step of forming through holes through the lap plate;
a defective part welding step of irradiating a laser beam coaxially with a nozzle, ejecting inactive gas from the nozzle to the defective part, to repair the defective part underwater by laser welding, after the through hole forming step; and
a through hole closing step of tightly closing the through holes underwater by irradiating a laser beam coaxially with the nozzle, ejecting inactive gas from the nozzle to the through holes, after the defective part welding step.

11. The method according to claim 10, **characterized in that**
the defective part is not removed but welded by keyhole welding in the defective part welding step.

12. The method according to claim 10, **characterized in that**
the defective part is not removed but welded by supplying a filler wire in the defective part welding step.

13. An underwater repair welding method for repairing a defective part of a lap plate itself arranged along a surface of a metal structure so as to cover part thereof or a defective part of a welding part of the lap plate underwater, **characterized in that** the method comprises:
a through hole forming step of forming through holes through the lap plate;
a defective part welding step of welding the defective part underwater using a TiG arc, an MiG arc, or a plasma arc by generating an arc coaxially with a nozzle, ejecting inactive gas from the nozzle to the defective part, to repair the defective part, after the through hole forming step; and
a through hole closing step of tightly closing the through holes underwater by welding using a TiG arc, an MiG arc, or a plasma arc coaxially with the nozzle, ejecting inactive gas from the nozzle to the through holes, after the defective part welding step.

14. The method according to claim 10, **characterized in that**
the defective part is removed and subsequently padding welding is conducted by laser welding, while supplying a filler wire in the defective part welding step.

15. The method according to any one of claims 10 through 14, **characterized in that**
the defective part is covered by a shield cover and repaired, while supplying a shield gas into the shield cover in the defective part welding step.

16. The method according to any one of claims 10 through 14, **characterized in that**
the through hole forming step includes:
a step of forming first through holes near the defective part to release steam generated in the defective part welding step and a step of forming second through holes below the first through holes to release the water remaining in the gap between the metal structure and the lap plate.

17. The method according to claim 16, **characterized in that** the through hole closing step includes:
a first through hole closing step of tightly closing the first through holes and a second through hole closing step of tightly closing the second through holes.

18. The method according to claim 17, **characterized in that**
the second through holes are covered by a shield cover and shield gas is supplied into the shield cover to discharge the water remaining in the gap between the metal structure and the lap plate and subsequently the second through holes are tightly closed in the second through hole closing step.

19. The method according to any one of claims 10 through 18, **characterized in that**
the defective part is a defective part of the welding part of the metal structure and the lap plate, and the defective part is removed so as to subsequently re-weld the metal structure and the lap plate in the defective part welding step.

20. The method according to any one of claims 10 through 19, **characterized in that**
laser processing is employed in the through hole forming step.

## Patentansprüche

1. Unterwasserreparaturschweißverfahren zum Schweißen einer Schutzplatte (3) an eine Metallstruktur (2), um eine Oberfläche der Struktur, die ein Teil enthält, das unter Wasser repariert werden soll, abzudecken, **dadurch gekennzeichnet, daß**
das Teil, das repariert werden soll, hermetisch von der Schutzplatte umschlossen wird durch Schweißen des Umfangs der Schutzplatte unter Wasser, während Inertgas (10) einem Schweißteil koaxial mit dem Laserstrahl (7) zum Laserschweißen zugeführt wird, wobei
die Schutzplatte mit einer Öffnung zum Freigeben von Dampf, der während des Schweißens aus dem Wasser, das zwischen der Schutzplatte und der Struktur zurückbleibt, erzeugt wird, versehen ist und
die Öffnung nach dem Schweißen des Außenumfangs der Schutzplatte an die Struktur geschlossen wird.

2. Verfahren nach Anspruch 1, **dadurch gekennzeichnet, daß**
die Öffnung benachbart zu einer der Seiten der Schutzplatte angeordnet ist und die Seite, die der Schutzplatte benachbart ist, beim Vorgang des Schweißens des Außenumfangs der Schutzplatte an die Struktur zuletzt geschweißt wird.

3. Verfahren nach einem der Ansprüche 1 oder 2, **dadurch gekennzeichnet, daß**
die Öffnung von unten nach oben durch Abdecken der Öffnung durch eine Abschirmplatte, Zuführen des Inertgases in die Abschirmabdeckung zum Ablassen des Wassers zwischen der Schutzplatte und der Struktur und anschließendes Ausstrahlen eines Laserstrahls geschlossen wird.

4. Verfahren nach Anspruch 3, **dadurch gekennzeichnet, daß**
die Oberfläche der Schutzplatte beim Ablassen des Wassers zwischen der Schutzplatte und der Struktur erhitzt wird.

5. Verfahren nach Anspruch 1, **dadurch gekennzeichnet, daß** der Schritt des Schweißens des Außenumfangs der Schutzplatte enthält:
einen ersten Schweißschritt zum Schweißen des Außenumfangs der Schutzplatte mit Ausnahme eines Teils davon,
einen Wasserablaßschritt des Ablassens des Wassers, das nach dem ersten Schweißschritt zwischen der Schutzplatte und der Struktur zurückbleibt, und
einen zweiten Schweißschritt des Schweißens des Teils des Außenumfangs der Schutzplatte, das in dem ersten Schweißschritt ungeschweißt belassen wurde, nach dem Wasserablaßschritt.

6. Verfahren nach Anspruch 1, **dadurch gekennzeichnet, daß**
der Schritt des Schweißens des Außenumfangs der Schutzplatte enthält: einen ersten Durchgang des Schweißens der Endfacetten der Schutzplatte von innen, und einen zweiten Durchgang des Schweißens eines Bereichs nahe den Endfacetten nach dem ersten Durchgang.

7. Verfahren nach einem der Ansprüche 1 bis 6, **dadurch gekennzeichnet, daß**
das Schweißen durch Abdecken des Schweißteils durch eine Abschirmabdeckung und Zuführen des Inertgases in die Abschirmabdeckung durchgeführt wird.

8. Verfahren nach Anspruch 7, **dadurch gekennzeichnet, daß**
das Schweißteil durch die Abschirmabdeckung abgedeckt wird und das Inertgas in die Abschirmabdeckung zugeführt wird, wenn der Außenumfang der Schutzplatte geschweißt wird, während eine Seitenabschirmdüse in der Abschirmabdeckung angeordnet wird, um das Inertgas zwischen die Schutzplatte und die Struktur einzuleiten, und Inertgas der Seitenschilddüse zugeführt wird.

9. Unterwasserreparaturschweißverfahren zum Schweißen einer Schutzplatte (3) an eine Metallstruktur (2), um eine Oberfläche der Struktur, die ein Teil enthält, das unter Wasser repariert werden soll, abzudecken, **dadurch gekennzeichnet, daß**
das Teil, das repariert werden soll, hermetisch von der Schutzplatte umschlossen wird durch Schweißen des Umfangs der Schutzplatte unter Benutzung eines WIG-Lichtbogens, eines MIG-Lichtbogens oder eines Plasmalichtbogens unter Wasser, während Inertgas (10) einem Schweißteil koaxial mit dem Lichtbogen zugeführt wird, wobei
die Schutzplatte mit einer Öffnung zum Freigeben von Dampf, der während des Schweißens aus dem Wasser, das zwischen der Schutzplatte und der Struktur zurückbleibt, erzeugt wird, versehen ist und
die Öffnung nach dem Schweißen des Außenumfangs der Schutzplatte an die Struktur geschlossen wird.

10. Unterwasserreparaturschweißverfahren zum Reparieren eines defekten Teils einer Überdeckungsplatte, die selbst entlang einer Oberfläche einer Metallstruktur zum Abdecken eines Teils davon angeordnet ist, oder eines defekten Teils eines Schweißteils der Überdeckungsplatte unter Wasser, **dadurch gekennzeichnet, daß** das Verfahren umfaßt:
einen Durchgangslochausbildungsschritt zum Ausbilden von Durchgangslöchern durch die Überdeckungsplatte,
einen Schritt des Schweißens des defekten Teils nach dem Durchgangslochausbildungsschritt durch Ausstrahlen eines Laserstrahls koaxial mit einer Düse und Ausstoßen von Inertgas aus der Düse zu dem defekten Teil, um das defekte Teil unter Wasser durch Laserschweißen zu reparieren, und
einen Durchgangslochschließschritt des dichten Schließens der Durchgangslöcher unter Wasser nach dem Schritt des Schweißens des defekten Teils durch Ausstrahlen eines Laserstrahls koaxial mit der Düse und Ausstoßen von Inertgas aus der Düse zu den Durchgangslöchern.

11. Verfahren nach Anspruch 10, **dadurch gekennzeichnet, daß**
das defekte Teil nicht entfernt wird, sondern durch Tiefschweißen im Schweißschritt des defekten Teils geschweißt wird.

12. Verfahren nach Anspruch 10, **dadurch gekennzeichnet, daß**
das defekte Teil nicht entfernt wird, sondern durch Zuführen eines Schweißdrahts im Schweißschritt des defekten Teils geschweißt wird.

13. Unterwasserreparaturschweißverfahren zum Reparieren eines defekten Teils einer Überdeckungsplatte, die selbst entlang einer Oberfläche einer Metallstruktur zum Abdecken eines Teils davon angeordnet ist, oder eines defekten Teils eines Schweißteils der Überdeckungsplatte unter Wasser, **dadurch gekennzeichnet, daß** das Verfahren umfaßt:
einen Durchgangslochausbildungsschritt zum Ausbilden von Durchgangslöchern durch die Überdeckungsplatte,
einen Schritt des Schweißens des defekten Teils nach dem Durchgangslochausbildungsschritt durch Schweißen des defekten Teils unter Wasser unter Benutzung eines WIG-Lichtbogens, eines MIG-Lichtbogens oder eines Plasmalichtbogens durch Erzeugen eines Lichtbogens koaxial mit einer Düse unter Wasser und Ausstoßen von Inertgas aus der Düse zu dem defekten Teil, um das defekte Teil zu reparieren, und
einen Durchgangslochschließschritt des dichten Schließens der Durchgangslöcher unter Wasser nach dem Schritt des Schweißens des defekten Teils durch Schweißen unter Benutzung eines WIG-Lichtbogens, eines MIG-Lichtbogens oder eines Plasmalichtbogens koaxial mit einer Düse und Ausstoßens von Inertgas aus der Düse zu den Durchgangslöchern.

14. Verfahren nach Anspruch 10, **dadurch gekennzeichnet, daß**
das defekte Teil entfernt wird und anschließend Füllschweißen durch Laserschweißen durchgeführt wird, während ein Schweißdraht in dem Schritt des Schweißens des defekten Teils zugeführt wird.

15. Verfahren nach einem der Ansprüche 10 bis 14, **dadurch gekennzeichnet, daß**
das defekte Teil durch eine Abschirmabdeckung abgedeckt und repariert wird, während ein Schutzgas in die Abschirmabdeckung im Schritt des Schweißens des defekten Teils zugeführt wird.

16. Verfahren nach einem der Ansprüche 10 bis 14, **dadurch gekennzeichnet, daß** der Durchgangslochausbildungsschritt enthält:
einen Schritt des Ausbildens von ersten Durchgangslöchern nahe dem defekten Teil zum Freigeben von Dampf, der im Schritt des Schweißens des defekten Teils erzeugt wird, und einen Schritt des Ausbildens von zweiten Durchgangslöchern unterhalb der ersten Durchgangslöcher zum Freigeben des Wassers, das in dem Spalt zwischen der Metallstruktur und der Überdeckungsplatte zurückbleibt.

17. Verfahren nach Anspruch 16, **dadurch gekennzeichnet, daß** der Durchgangslochschließschritt enthält:
einen ersten Durchgangslochschließschritt des dichten Schließens der ersten Durchgangslöcher und einen zweiten Durchgangslochschließschritt des dichten Schließens der zweiten Durchgangslöcher.

18. Verfahren nach Anspruch 17, **dadurch gekennzeichnet, daß**
die zweiten Durchgangslöcher durch eine Abschirmabdeckung abgedeckt werden und Schutzgas zum Ablassen des Wassers, das in dem Spalt zwischen der Metallstruktur und der Überdeckungsplatte zurückbleibt, in die Abschirmabdeckung zugeführt wird und anschließend die zweiten Durchgangslöcher im zweiten Durchgangslochschließschritt dicht geschlossen werden.

19. Verfahren nach einem der Ansprüche 10 bis 18, **dadurch gekennzeichnet, daß**
das defekte Teil ein defektes Teil des Schweißteils der Metallstruktur und der Überdeckungsplatte ist und das defekte Teil zum anschließenden erneuten Schweißen der Metallstruktur und der Überdeckungsplatte im Schritt des Schweißens des defekten Teils entfernt wird.

20. Verfahren nach einem der Ansprüche 10 bis 19, **dadurch gekennzeichnet, daß** Laserbearbeitung im Durchgangslochausbildungsschritt eingesetzt wird.

## Revendications

1. Procédé de soudage de réparation sous l'eau afin de souder une plaque de protection (3) sur une construction métallique (2) de façon à recouvrir une surface de la structure comprenant une pièce devant être réparée sous l'eau, **caractérisé en ce que**
la pièce devant être réparée est hermétiquement fermée par la plaque de protection en soudant la périphérie de la plaque de protection sous l'eau, tout en délivrant du gaz inactif (10) à une partie de soudage coaxialement au faisceau laser (7) pour le soudage au laser,
la plaque de protection étant pourvue d'une ouverture destinée à libérer de la vapeur produite pendant le soudage par l'eau restant entre la plaque de protection et la structure, et
l'ouverture étant fermée après soudage de la périphérie extérieure de la plaque de protection sur la structure.

2. Procédé selon la revendication 1, **caractérisé en ce que**
l'ouverture est disposée de façon adjacente à un des côtés de la plaque de protection et le côté adjacent à la plaque de protection est soudé en dernier dans l'opération de soudage de la périphérie extérieure de la plaque de protection sur la structure.

3. Procédé selon les revendications 1 ou 2, **caractérisé en ce que** l'ouverture est fermée depuis le dessous jusqu'au dessus en recouvrant l'ouverture par un capot de protection, en délivrant le gaz inactif dans le capot de protection afin d'évacuer l'eau entre la plaque de protection et la structure et en irradiant ensuite un faisceau laser.

4. Procédé selon la revendication 3 **caractérisé en ce que** la surface de la plaque de protection est chauffée en évacuant l'eau entre la plaque de protection et la structure.

5. Procédé selon la revendication 1, **caractérisé en ce que** l'étape de soudage de la périphérie extérieure de la plaque de protection comprend :
une première étape de soudage destinée à souder la périphérie extérieure de la plaque de protection à l'exception d'une partie de celle-ci ;
une étape d'évacuation de l'eau destinée à évacuer l'eau restant entre la plaque de protection et la structure après la première étape de soudage ; et
une deuxième étape de soudage destinée à souder la partie de la périphérie extérieure de la plaque de protection laissée non soudée dans la première étape de soudage après l'étape d'évacuation d'eau.

6. Procédé selon la revendication 1, **caractérisé en ce que** l'étape de soudage de la périphérie extérieure de la plaque de protection inclut : une première passe de soudage des facettes d'extrémité de la plaque de protection par l'intérieur ; et une deuxième passe de soudage d'une zone proche des facettes d'extrémité après la première passe.

7. Procédé selon l'une quelconque des revendications 1 à 6, **caractérisé en ce que** le soudage est réalisé en recouvrant la partie de soudage par un capot de protection et en délivrant le gaz inactif dans le capot de protection.

8. Procédé selon la revendication 7, **caractérisé en ce que** la partie de soudage est recouverte par le capot de protection et le gaz inactif est délivré dans le capot de protection lors du soudage de la périphérie extérieure de la plaque de protection, alors qu'une buse de protection latérale est disposée dans le capot de protection afin de délivrer le gaz inactif entre la plaque de protection et la structure, et du gaz inactif est délivré à la buse de protection latérale.

9. Procédé de soudage de réparation sous l'eau destiné à souder une plaque de protection (3) sur une construction métallique (2) de façon à recouvrir une surface de la structure comprenant une pièce devant être réparée sous l'eau, **caractérisé en ce que**
la pièce devant être réparée est hermétiquement fermée par la plaque de protection en soudant la périphérie de la plaque de protection sous l'eau en utilisant un arc TiG, un arc MIG, ou un arc à plasma, tout en délivrant du gaz inactif (10) à une partie de soudage coaxialement à l'arc,
la plaque de protection étant pourvue d'une ouverture destinée à libérer de la vapeur produite pendant le soudage par l'eau restant entre la plaque de protection et la structure, et
l'ouverture étant fermée après soudage de la périphérie extérieure de la plaque de protection sur la structure.

10. Procédé de soudage de réparation sous l'eau destiné à réparer une pièce défectueuse d'une plaque de recouvrement elle-même disposée le long d'une surface d'une construction métallique de façon à recouvrir une partie de celle-ci ou une partie défectueuse d'une partie de soudage de la plaque de recouvrement sous l'eau, **caractérisé en ce que** le procédé comprend :
un étape de formation de trou débouchant destinée à former des trous débouchants à travers la plaque de recouvrement ;
une étape de soudage de pièce défectueuse en irradiant un faisceau laser coaxialement à une buse, en éjectant du gaz inactif depuis la buse jusqu'à la pièce défectueuse, afin de réparer la pièce défectueuse sous l'eau par soudage au laser, après l'étape de formation de trou débouchant ; et
une étape de fermeture de trou débouchant destinée à fermer de manière étanche les trous débouchants sous l'eau en irradiant un faisceau laser coaxialement à la buse, en éjectant du gaz inactif depuis la buse jusqu'aux trous débouchants, après l'étape de soudage de pièce défectueuse.

11. Procédé selon la revendication 10, **caractérisé en ce que** la pièce défectueuse n'est pas enlevée mais soudée par le soudage de trou de la serrure dans l'étape de soudage de pièce défectueuse.

12. Procédé selon la revendication 10, **caractérisé en ce que** la pièce défectueuse n'est pas enlevée mais soudée en délivrant un fil de charge dans l'étape de soudage de pièce défectueuse.

13. Procédé de soudage de réparation sous l'eau destiné à réparer une pièce défectueuse d'une plaque de recouvrement elle-même disposée le long d'une surface d'une construction métallique de façon à recouvrir une partie de celle-ci ou une pièce défectueuse d'une pièce de soudage de la plaque de recouvrement sous l'eau, **caractérisé en ce que** le procédé comporte :
une étape de formation de trou débouchant destinée à former des trous débouchants à travers la plaque de recouvrement ;
une étape de soudage de pièce défectueuse destinée à souder la pièce défectueuse sous l'eau en utilisant un arc TiG, un arc MIG, ou un arc de plasma en générant un arc coaxialement à une buse, en éjectant du gaz inactif depuis la buse jusqu'à la pièce défectueuse, afin de réparer la pièce défectueuse après l'étape de formation de trou débouchant ; et
une étape de fermeture de trou débouchant destinée à fermer de manière étanche les trous débouchants sous l'eau par soudage en utilisant un arc TiG, un arc MIG, ou un arc de plasma coaxialement à la buse, en éjectant du gaz inactif depuis la buse jusqu'aux trous débouchants, après l'étape de soudage de pièce défectueuse.

14. Procédé selon la revendication 10, **caractérisé en ce que** la pièce défectueuse est enlevée et ensuite un soudage de recharge est réalisé par soudage au laser, tout en délivrant un fil de charge dans l'étape de soudage de pièce défectueuse.

15. Procédé selon l'une quelconque des revendications 10 à 14, **caractérisé en ce que** la pièce défectueuse est recouverte par un capot de protection et réparée, tout en délivrant un gaz de protection dans le capot de protection dans l'étape de soudage de pièce défectueuse.

16. Procédé selon l'une quelconque des revendications 10 à 14, **caractérisé en ce que** l'étape de formation de trou débouchant comprend :
une étape de formation de premiers trous débouchants près de la pièce défectueuse afin de libérer de la vapeur produite dans l'étape de soudage de pièce défectueuse et une étape de formation de deuxièmes trous débouchants sous les premiers trous débouchants afin de libérer l'eau restant dans l'espace entre la construction métallique et la plaque de recouvrement.

17. Procédé selon la revendication 16, **caractérisé en ce que** l'étape de fermeture de trou débouchant comprend :
un étape de fermeture de premier trou débouchant destinée à fermer les premiers trous débouchants et une étape de fermeture de deuxième trou destinée à fermer de manière étanche les deuxièmes trous débouchants.

18. Procédé selon la revendication 17, **caractérisé en ce que** les deuxièmes trous débouchants sont recouverts par un capot de protection et du gaz de protection est délivré dans le capot de protection afin d'évacuer l'eau restant dans l'espace entre la construction métallique et la plaque de recouvrement et ensuite les deuxièmes trous débouchants sont fermés de manière étanche dans l'étape de fermeture de deuxième trou débouchant.

19. Procédé selon l'une quelconque des revendications 10 à 18, **caractérisé en ce que** la partie défectueuse est une partie défectueuse de la partie de soudage de la structure métallique et de la plaque de recouvrement, et la partie défectueuse est enlevée de façon ressouder ensuite la structure métallique et la plaque de recouvrement dans l'étape de soudage de partie défectueuse.

20. Procédé selon l'une quelconque des revendications 10 à 19, **caractérisé en ce qu'**un traitement laser est utilisé dans l'étape de formation de trou débouchant.
